(19) Europäisches Patentamt
European Patent Office
Office européen des brevets

(11) **EP 3 883 145 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **20163930.9**

(22) Anmeldetag: **18.03.2020**

(51) Internationale Patentklassifikation (IPC):
**H04B 7/185** (2006.01)

(52) Gemeinsame Patentklassifikation (CPC):
**H04B 7/18539**

(54) **SATELLITENKOMMUNIKATIONSSYSTEM UND VERFAHREN ZUM AUSRICHTEN VON SATELLITENANTENNEN EINES SOLCHEN SATELLITENKOMMUNIKATIONSSYSTEMS**

SATELLITE COMMUNICATION SYSTEM AND METHOD FOR ALIGNING SATELLITE ANTENNAS OF SAID SATELLITE COMMUNICATION SYSTEM

SYSTÈME DE COMMUNICATION SATELLITE ET PROCÉDÉ D'ALIGNEMENT DES ANTENNES SATELLITE DUDIT SYSTÈME DE COMMUNICATION SATELLITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.09.2021 Patentblatt 2021/38**

(73) Patentinhaber: **Deutsche Telekom AG**
**53113 Bonn (DE)**

(72) Erfinder: **WITYCH, Michael**
**53227 Bonn (DE)**

(74) Vertreter: **Blumbach · Zinngrebe Patentanwälte PartG mbB**
**Elisabethenstrasse 11**
**64283 Darmstadt (DE)**

(56) Entgegenhaltungen:
WO-A1-2007/090506    WO-A1-2017/177343
US-A1- 2002 077 099   US-A1- 2019 319 724
US-B1- 7 369 809

## Beschreibung

Die Erfindung betrifft ein Satellitenkommunikationssystem zur mobilen Satellitenkommunikation, welches insbesondere zumindest eine Kommunikation von und/oder zu einem mobilen Satellitenfunk-Endgerät über wenigstens einen Kommunikationssatelliten ermöglicht, sowie ein Verfahren zum Ausrichten von Satellitenantennen eines solchen Satellitenkommunikationssystems, und zwar insbesondere in Abhängigkeit von einem zeit- und ortsabhängigen Kommunikationsbedarf von Satellitenfunk-Endgeräten.

Bei der mobilen Satellitenkommunikation können bidirektionale Telekommunikationsverbindungen über Satellitentelefone, welche sich vorzugsweise auf der Erdoberfläche befinden, zu Kommunikationssatelliten eines Satellitenkommunikationssystems aufgebaut werden. Die Kommunikationssatelliten umkreisen hierbei auf verschiedenen Umlaufbahnen die Erde. Je nach Höhe werden die Umlaufbahnen unter anderem in niedrige, d.h. erdnahe Erdumlaufbahnen, sogenannte Low Earth Orbits (LEO), und mittlere Erdumlaufbahnen, sogenannte Medium Earth Orbit (MEO), eingeteilt. Unter der URL "https://de.wikipedia.org/wiki/Satellitenorbit" findet sich eine Abbildung mit den üblichen Satellitenhöhen und Bahngeschwindigkeiten.

Für zeitkritische Kommunikationsanwendungen, wie zum Beispiel Multimedia- oder Sprachanwendungen, die geringe Signalumlaufzeiten im Millisekunden Bereich verlangen, werden LEO-Satelliten-Kommunikationssysteme eingesetzt, deren Kommunikationssatelliten auf niedrigen Erdumlaufbahnen (z.B. in Höhen zwischen 200 bis 2000km) die Erde umkreisen. Kommunikationssatelliten, die auf niedrigen Erdumlaufbahnen die Erde umkreisen, werden kurz auch LEO-Kommunikationssatelliten genannt. Um eine globale Netzabdeckung zu erzielen, werden eine Vielzahl von LEO-Kommunikationssatelliten benötigt, deren Antennen auf der Erdoberfläche sich überlappende Footprints, d.h. Ausleuchtungszonen, erzeugen. Auf diese Weise können mehrere alternative Satelliten-Kommunikationsverbindungen zu unterschiedlichen Satelliten für einen Standpunkt auf der Erde genutzt werden.

Ein bekanntes globales Satellitenkommunikationssystem für die mobile Satellitenkommunikation ist das Iridium-Satellitenkommunikationssystem, welches beispielsweise im Internet unter der URL "https://en.wikipedia.org/wiki/Iridium_Communications" näher beschrieben ist. Das Iridium-Kommunikationsnetz weist 66 Satelliten auf, die auf sechs erdnahen Umlaufbahnen, sogenannten Low Earth Orbits, verteilt die Erde umkreisen. Hierbei umkreisen vorzugsweise jeweils 11 Satelliten auf einer Umlaufbahn die Erde, wobei die Umlaufbahnen vorzugsweise Polumlaufbahnen sind, die im Wesentlichen durch den geographischen Nord- und Südpol verlaufen. Die 66 Iridium-Kommunikationssatelliten ermöglichen eine unterbrechungsfreie Satellitenkommunikation, indem sie eine globale Netzabdeckung erzielen. Hierzu strahlen die Antennen aller Kommunikationssatelliten Energie in einer Richtung zur Erdoberfläche ab, wodurch sich teilweise überlappende Footprints, auch Ausleuchtungszonen genannt, auf die Erdoberfläche projiziert werden. Die Footprints wandern synchron mit der Bewegung der Kommunikationssatelliten und in Abhängigkeit davon, dass sich die Erde unter den Umlaufbahnen dreht, auf unterschiedlichen Pfaden über die Erdoberfläche. Allerdings ist die Wanderung der Footprints über die Erdoberfläche und die Überlappung der Footprints relativ starr auf ein und derselben geographischen Breite, da die Antennen aller Kommunikationssatelliten Energie in einer fest vorgegebenen Richtung zur Erdoberfläche, nämlich in Richtung zum Erdmittelpunkt, abstrahlen. Zu den Polen hin werden die Überlappungsbereiche der Footprints größer. Auf Höhe des Äquators sind sie minimal.

Für nicht zeitkritische Kommunikationsanwendungen kann auch ein Satellitenkommunikationsnetz genutzt werden, dessen Kommunikationssatelliten die Erde zum Beispiel auf mittleren Umlaufbahnen, sogenannten Medium Earth Orbits (MEO) umkreisen. Gegebenenfalls können LEO-Satelliten und MEO-Satelliten gleichzeitig genutzt werden und sogar Interkommunikations-Lösungen zwischen LEOs und MEOs eingeplant werden sollten.

Die WO 2007/090506 A1 beschreibt ein System und ein Verfahren zum Aufbau eines Satellitenkommunikationsnetzwerks mit einem kundenorientierten, modularen und flexiblen Ansatz für die Bereitstellung von Satellitenkommunikationsdiensten. Der Anbieter eines Satellitennetzes entwickelt eine Lösung für ein Kundenproblem aus einem Designraum, der durch Satellitengröße, Lebensdauer und Nutzlast beschränkt ist. Der Anbieter des Satellitennetzes kann die Bedürfnisse der Nutzer des Systems laufend überprüfen, um das Netzwerk an die aktuellen und künftigen Bedürfnisse des oder der Kunden anzupassen. Darüber hinaus bietet die Verwendung von Kleinsatelliten mit einer On-Board-Funktionalität die Modularität bei gleichzeitiger wirtschaftlicher Machbarkeit.

Weiter offenbart die US 2002/0077099 A1 ein digitales Breitband-Satellitenkommunikationssystem zur Bereitstellung von Breitband-Datendiensten. Das System umfasst mindestens eine geostationäre Kommunikationsvorrichtung auf einer Erdumlaufbahn und mindestens eine Steuerung mit Breitbandkommunikationsfähigkeit mit der Kommunikationsvorrichtung. Das System umfasst auch mindestens eine LEO-Kommunikationseinrichtung (Low Earth Orbit). Die LEO-Kommunikationseinrichtung weist eine Kommunikationsfähigkeit mit der mindestens einen geostationären Kommunikationsvorrichtung, eine Kommunikationsfähigkeit mit niedriger Datenrate mit einem landgestützten Mobilfunkdienstanbieter und ein Breitband-Kommunikationsfähigkeit mit einem Mobilbenutzer-Teilnehmer des Mobilkommunikationsdienstanbieters auf.

Schließlich offenbart die US 7,369,809 B1 ein Verfahren und eine Vorrichtung zum Bereitstellen von nahezu kontinuierlichen Rundfunkdiensten für eine oder mehrere terrestrische Empfängerstationen. Das System umfasst mehrere Satelliten, wobei sich jeder Satellit in einer geneigten, elliptischen geosynchronen Umlaufbahn befindet und einen Teil des nahezu kontinuierlichen Rundfunkdienstes für den terrestrischen Empfänger bereitstellt. Das System umfasst auch eine Empfängerstation mit einer Legacy-Antenne, die ein Empfindlichkeitsmuster aufweist, das im Wesentlichen an die Spur der scheinbaren Position der aktiv Informationen an die Empfängerstationen sendenden Satelliten angepasst ist. Die Satelliten können Ihre Strahlen steuern, um die Verschlechterung der Verstärkung aufgrund von Bewegung zu minimieren. Bei dem Verfahren wird zumindest ein nahezu kontinuierlicher Rundfunkdienst von mindestens einem einer Vielzahl von Satelliten zu einer Zeit empfangen, wobei sich jeder Satellit in einer geneigten, elliptischen, geosynchronen Umlaufbahn befindet.

Der vorliegenden Erfindung liegt die Aufgabe zugrunde, ein Satellitenkommunikationssystem zu schaffen, sowie ein Verfahren zur Ansteuerung von Satellitenantennen eines solchen Satellitenkommunikationssystems bereitzustellen, mit denen eine flexible und optimale Kommunikationsversorgung eines geographischen Gebiets insbesondere bei einem erhöhten Kommunikationsbedarf ermöglicht wird.

Die obengenannte technische Aufgabe wird durch die Merkmale des Anspruchs 1 und durch die Verfahrensschritte des Anspruchs 9 gelöst.

Vorteilhafte Weiterbildungen und Ausgestaltungen sind Gegenstand der abhängigen Ansprüche.

Ein Kerngedanke der Erfindung kann darin gesehen werden, die Überlappungsbereiche von Footprints, die von den Kommunikationssatelliten auf die Erdoberfläche projiziert werden, zeit- und gebietsabhängig zu vergrößern, um gezielt die Kommunikationskapazität mehrerer geeigneter Satelliten auf ein geographisches Gebiet zu lenken, in welchem ein erhöhter Kommunikationsbedarf aktuell vorliegt oder für den ein erhöhter Kommunikationsbedarf prognostiziert worden ist. Auf diese Weise kann insbesondere die Gesamtauslastung des Satellitenkommunikationssystems hinsichtlich eines zeitabhängigen, satellitenbasierten Gesamtkommunikationsbedarfs von und zu Satellitentelefonen auf der Erdoberfläche optimiert werden.

Angemerkt sei, dass mit dem Begriff "Kommunikationskapazität eines Satelliten" insbesondere dessen maximale Anzahl an gleichzeitig bedienbaren Kommunikationsverbindungen zu und/oder von Satelliten-Endgeräten, aber nicht zwischen Satelliten verstanden wird.

Die Erfindung ermöglicht somit vorteilhafterweise eine bessere Versorgung eines geografischen Gebietes mit einem erhöhten Kommunikationsbedarf bzw. Kommunikationsaufkommen während einer bestimmten Zeit. Dies wird zweckmäßigerweise dadurch erreicht, dass Antennen von Kommunikationssatelliten, die auf benachbarte geografische Gebiete mit einem unkritischen Kommunikationsbedarf ausgerichtet sind, gezielt in Richtung des geografischen Gebiets mit erhöhtem Kommunikationsbedarf ausgerichtet werden. Die zur zusätzlichen Versorgung des geografischen Gebiets mit erhöhtem Kommunikationsbedarf hinzugezogenen Kommunikationssatelliten fungieren somit als Unterstützungssatelliten. Mit anderen Worten: Es wird gezielt Kommunikationskapazität von den Unterstützungs-Kommunikationssatelliten aus benachbarten geografischen Gebieten abgezogen und dem geografischen Gebiet mit einem erhöhten Kommunikationsbedarf zur Verfügung gestellt, indem die Antennen der Unterstützungssatelliten gezielt in eine Richtung ausgerichtet werden, die von einer Antennenausrichtung, die unabhängig vom zeit- und ortsabhängigen Kommunikationsbedarf erfolgt, abweicht. Vorzugsweise wird gleichzeitig darauf geachtet, dass hierdurch keine kommunikationstechnischen Versorgungslücken entstehen.

Die Unterstützungssatelliten entziehen also ihren Hauptversorgungsgebieten Kommunikationskapazitäten, die aber in ähnlicher Weise zum Teil oder sogar vollständig wieder durch geeignete Nachbarsatelliten abgedeckt werden können. Geeignet sind Nachbarsatelliten dann, wenn in deren Hauptversorgungsgebiet kein kritischer Kommunikationsbedarf vorliegt oder zu erwarten ist. Es kann somit eine Kettenreaktion oder mehrere aufeinander abzustimmende Kettenreaktionen zur geeigneten Ausrichtungsnachführung von Satellitenantennen ausgelöst werden. Die hierzu erforderlichen Steuerparameter zur vorzugsweise aufeinander abgestimmten Ansteuerung der betroffenen Antennen können durch eine geeignete Zielfunktion berechnet werden.

Zweckmäßigerweise wird jedes geografische Versorgungsgebiet, nachfolgend auch geografisches Teilgebiet genannt, von beispielsweise 2 bis 5 Satelliten kommunikationstechnisch versorgt, sodass ein Satellitentelefon immer mindestens 2 Satelliten zur Auswahl hat, um eine Kommunikationsverbindung aufzubauen.

Die Erfindung wird nachfolgend anhand eines Ausführungsbeispiels in Verbindung mit den beiliegenden Zeichnungen näher erläutert. Es zeigen:

Figur 1    die schematische Darstellung eines beispielhaften Satellitenkommunikationssystems, in welchem die Erfindung verwirklicht ist,

Figur 2    einen Ausschnitt einer geografischen Netzabdeckung mit neun Ausleuchtungs- bzw. Versorgungszonen, die bei einer Ausrichtung von neun Satellitenantennen beispielsweise auf einen gemeinsamen Referenzpunkt, wie zum Beispiel den Erdmittelpunkt, auf die Erdoberfläche projiziert werden,

Figur 3    den in Figur 2 gezeigten Ausschnitt einer geografischen Netzabdeckung, wobei zwei Versorgungzonen in das Teilgebiet 2 verschoben worden sind, und

Figur 4 den in Figur 3 gezeigten Ausschnitt einer geografischen Netzabdeckung, wobei u.a. eine weitere Versorgungszone in das Teilgebiet 2 und eine neue Versorgungszone in das Teilgebiet 3 verschoben worden ist.

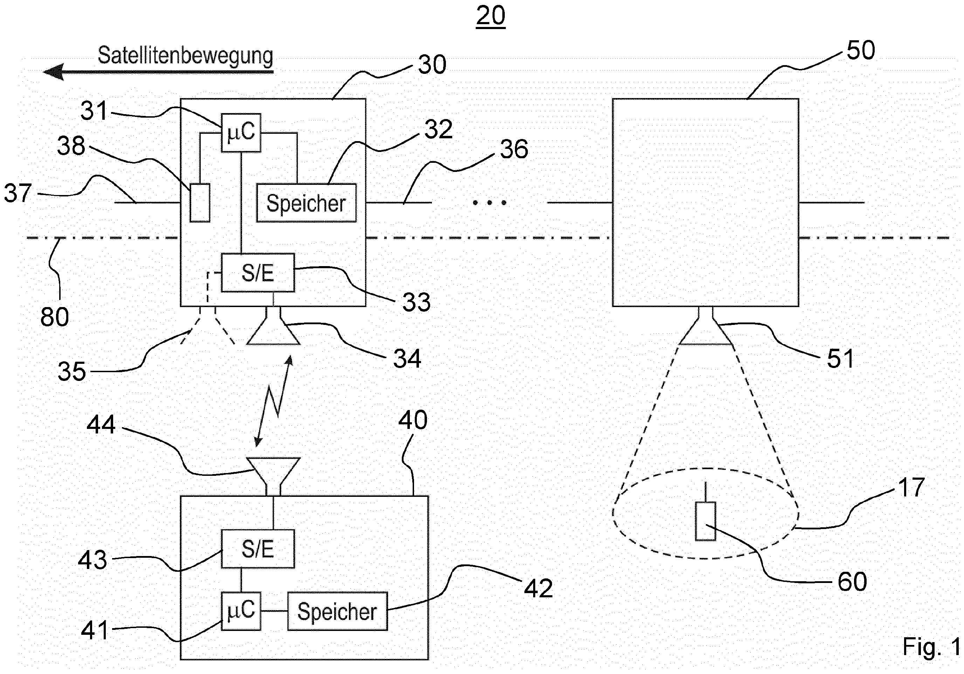

Figur 1 zeigt ein beispielhaftes, schematisch und auszugsweise dargestelltes Satellitenkommunikationssystem 20, welches mehrere Kommunikationssatelliten 30, 50 und wenigstens eine Bodenstation 40 aufweisen kann. Das beispielhafte Satellitenkommunikationssystem 20 kann zum Beispiel auf dem bekannten Iridium-Satellitenkommunikationssystem mit seinen Polbahnen und Überlappungsbereichen der Footprints direkt benachbarter Satelliten aufbauen, welches wie nachfolgend noch ausgeführt, modifiziert werden kann.

Das beispielhafte Satellitenkommunikationssystem 20 kann somit beispielsweise 66 Kommunikationssatelliten aufweisen, die, auf sechs Umlaufbahnen verteilt, die Erde umkreisen. Auf jeder Umlaufbahn umkreisen jeweils elf Kommunikationssatelliten die Erde. Bei den Umlaufbahnen kann es sich um Polbahnen handeln.

Da die Kommunikationssatelliten, von denen lediglich die Kommunikationssatelliten 30 und 50 dargestellt sind, hinsichtlich Aufbaus und Funktion im Wesentlichen identisch sein können, wird lediglich der Kommunikationssatellit 30 näher beschrieben.

In herkömmlicher Weise weist der Kommunikationssatellit 30 eine Steuereinrichtung 31 auf, die beispielsweise als Mikrocontroller ausgebildet sein kann. Darüber hinaus verfügt der Kommunikationssatellit 30 über eine Sende-/Empfangs-Anlage, die eine Sende-/Empfangseinrichtung 33 und eine Satellitenantenne 34 umfasst. Gegebenenfalls kann eine zweite Satellitenantenne 35 (gestrichelt dargestellt) mit der Sende-/Empfangseinrichtung 33 verbunden sein. Weiterhin ist eine Speichereinrichtung 32 im Kommunikationssatelliten 30 implementiert, in der unter anderem ein Betriebssystem zum Steuern und Überwachen des Kommunikationssatelliten 30 gespeichert sein kann. In herkömmlicher Weise können am Kommunikationssatelliten 30 beispielsweise zwei Solarpanels 36 und 37 montiert sein, die den Kommunikationssatelliten 30 und dessen elektrische und/oder elektronische Komponenten mit Energie versorgt. Darüber hinaus kann im Kommunikationssatelliten 30 eine wiederaufladbare Batterie angeordnet sein. Ein Kommunikationssatellit kann auch eine Einheit enthalten, die die Kommunikation zu anderen Satelliten gewährleistet, die aber hier nicht dargestellt ist.

Unter Ansprechen auf das in der Speichereinrichtung 32 hinterlegte Betriebssystem, kann der Mikrocontroller 31 die räumliche Lage des Satelliten 30 stabilisieren und gegebenenfalls besser beeinflussen oder steuern, in Verbindung mit einer Einrichtung 38 die aktuelle Position und, wenn gewünscht, auch die aktuelle Orientierung des Kommunikationssatelliten 30 und/oder seiner Antenne(n) ermitteln. Insbesondere kann der Kommunikationssatellit 30 mithilfe des Positionsermittlungssystems 38 seine aktuelle Position und gegebenenfalls Orientierung relativ zu einem Referenz-Koordinatensystem ermitteln.

Weiterhin können in der Speichereinrichtung 32 erste Steuerinformationen zur Ausrichtungsnachführung der Antenne 34 gespeichert sein. Die Steuereinrichtung 31 ist dazu ausgebildet, die ersten Steuerinformationen auszulesen und unter Ansprechen auf die ersten Steuerinformationen die Antenne 34 unabhängig von der Position des Kommunikationssatelliten 30 auf einen vorgegebenen Referenzpunkt bezüglich der Erde auszurichten. Bei dem vorgegebenen Referenzpunkt kann es sich vorzugsweise um den Erdmittelpunkt handeln. Bereits an dieser Stelle sei erwähnt, dass alle Kommunikationssatelliten des Satellitenkommunikationssystems 20 einen gemeinsamen Referenzpunkt, wie zum Beispiel den Erdmittelpunkt, aufweisen kann, oder jeweils verschiedene vorgegebene Referenzpunkte aufweisen können. Demzufolge strahlt die Antenne 34 Energie auf die Erdoberfläche ab, wodurch ein Footprint, auch Ausleuchtungszone oder Versorgungszone genannt, auf die Erdoberfläche projiziert wird, der durch die Bewegung der Erde und durch die Bewegung des Kommunikationssatelliten 30 oder seiner Antenne(n) auf einer bestimmten Spur über die Erdoberfläche wandert. Eine dem Kommunikationssatelliten 50 zugeordnete Ausleuchtungszone 17 ist in Figur 1 gezeigt.

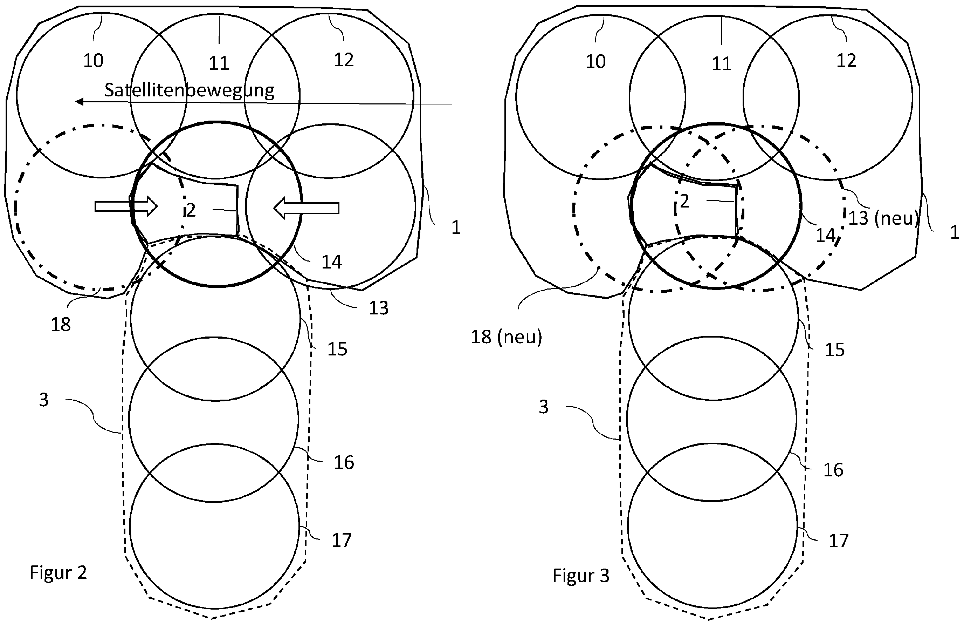

Bei dem hier beispielhaft betrachteten Satellitenkommunikationssystem 20 umkreisen die Kommunikationssatelliten 30 und 50 und weitere 64 Satelliten die Erde auf sechs niedrigen Umlaufbahnen, auch Low Earth Orbits genannt. Die von den Satellitenantennen abgedeckten Funkbereiche, die als Footprints auf die Erdoberfläche projiziert werden, überlappen sich, wie dies beispielhaft anhand von neun Footprints 10 bis 18 in Fig. 2 dargestellt ist. Es gilt, dass die Überlappungsbereiche der Footprints desto größer sind, je mehr Satelliten zur Verfügung stehen oder je größer die Öffnungswinkel der Satellitenantennen sind, oder je höher die Satelliten fliegen.

Angenommen sei, dass die Kommunikationskapazität des Kommunikationssatelliten 30 sowie der übrigen Kommunikationssatelliten des Satellitenkommunikationssystems 20 jeweils auf eine bestimmte Anzahl an Kommunikationsverbindungen, die der jeweilige Kommunikationssatellit gleichzeitig abwickeln bzw. steuern kann, festgelegt ist. Beispielsweise kann jeder Kommunikationssatellit des Satellitenkommunikationssystems 20 eine Anzahl von 1000 Kommunikationsverbindungen gleichzeitig abwickeln. Unter einer Kommunikationsverbindung wird insbesondere entweder eine Uplink-Kommunikationsverbindung zum Beispiel vom Satellitentelefon 60 zum Kommunikationssatelliten 50 oder eine Downlink-Kommunikationsverbindung vom Kommunikationssatelliten 50 zum Satellitentelefon 60 verstanden. So können beim vorliegenden Beispiel gleichzeitig 1000 Satellitentelefone einen Kommunikationsverbindungsaufbau zum Kommunikationssatelliten 50 einleiten. Weiterhin sei angenommen, dass, wie allgemein bekannt ist, jeder auf die Erdoberfläche projizierte Footprint eines Kommunikationssatelliten mehrere einzelne Zellen, auch Spotbeams genannt, umfassen kann, die jeweils eine bestimmte Anzahl an Kommunikationsverbindungen von und zu einem Kommunikationssatelliten ermöglichen.

Weiterhin sei angenommen, dass das Satellitenkommunikationssystem 20 in an sich bekannter Weise einen Handover zwischen Spotbeams des gleichen Kommunikationssatelliten oder benachbarten Kommunikationssatelliten durchführen kann, sodass bestehende Kommunikationsverbindungen aufrechterhalten werden können. Solche Handover-Prozeduren sind bekannt, jedoch nicht Gegenstand der vorliegenden Erfindung. Ein Handoverprozess ist zum Beispiel in dem Aufsatz "Handover Sceens in a satellite networks: state-off-the-art and future research directions, IEEE, zu finden unter der URL https://PDFS. Symantec SCHOLAR.org/B367/D62B948932E2E39D64D2 AE184E97 ED2ECDA vier.pdf, beschrieben.

Um einen zeit- und ortsabhängigen Satellitenkommunikationsbedarf vorzugsweise weltweit über das Satellitenkommunikationssystems 20 optimal abwickeln zu können, genügt es nicht, die Antennen der Kommunikationssatelliten des Satellitenkommunikationssystems 20, wie bisher, ohne Berücksichtigung eines sich zeitlich ändernden Kommunikationsbedarfs zum Beispiel auf einen gemeinsamen Referenzpunkt, wie zum Beispiel den Erdmittelpunkt, auszurichten. Vielmehr ist es vorteilhaft, die Satellitenantennen flexibel in Abhängigkeit des sich zeitlich und geografisch verändernden Kommunikationsbedarfs bzw. Kommunikationsaufkommens auszurichten. Angemerkt sei an dieser Stelle, dass unter dem Begriff "Kommunikationsbedarf- bzw. -aufkommen" vorzugsweise eine von der Zeit und dem Ort abhängige Anzahl an aktuell gleichzeitig bestehenden Kommunikationsverbindungen oder vorzugsweise eine von der Zeit und dem Ort abhängige prognostizierte Anzahl an gleichzeitig abzuwickelnden Kommunikationsverbindungen in einem geographischen Teilgebiet zu verstehen ist. Angenommen sei deshalb, dass vorzugsweise die gesamte Erdoberfläche in mehrere, vorzugsweise nahtlos aneinandergrenzende geografische Teilgebiete unterteilt wird, wobei jedes geografische Teilgebiet beispielsweise von mindestens zwei Kommunikationssatelliten ausgeleuchtet bzw. kommunikationstechnisch versorgt wird. In den Figuren 2 und 3 sind beispielhaft drei aneinandergrenzende Teilgebiete 1 bis 3 dargestellt, die, wie nachfolgend noch näher erläutert wird, zu einem Zeitpunkt t0 jeweils einen unterschiedlichen, zu erwartenden Kommunikationsbedarf haben.

Um eine optimale kommunikationstechnische Versorgung der Teilgebiete zu ermöglichen, ist es notwendig, den zeitabhängigen Kommunikationsbedarf hinsichtlich jedes Teilgebiets zu kennen. Ferner ist vorzugsweise für jedes Teilgebiet die maximal verfügbare Kommunikationskapazität derjenigen Kommunikationssatelliten zu ermitteln, die bei einer herkömmlichen Ausrichtung der Antennen beispielsweise auf einen gemeinsamen Referenzpunkt, zum Beispiel den Erdmittelpunkt, das jeweilige Teilgebiet zumindest teilweise ausleuchten. Herkömmliche Ausrichtung bedeutet, dass die Antenne bisher ohne Berücksichtigung eines zeit- und ortsabhängigen Kommunikationsbedarfs ausgerichtet werden. Diese maximal für ein Teilgebiet verfügbare Gesamtkapazität kann auch als Dargebot bezeichnet werden. Unter einer Gesamtkapazität oder einem Dargebot ist vorzugsweise die Gesamtanzahl an Kommunikationsverbindungen zu verstehen, welche die Kommunikationssatelliten, die das Teilgebiet zu einem Zeitpunkt oder während einer endlichen Zeitspanne zumindest teilweise versorgen, verarbeiten können.

Der zeitabhängige Kommunikationsbedarf kann für jedes Teilgebiet aktuell zum Beispiel von den beteiligten Kommunikationssatelliten oder zum Beispiel von der Bodenstation ermittelt werden. Zweckmäßigerweise wird jedoch ein zu erwartendes zeit- und gebietsabhängiges Kommunikationsaufkommen aus historischen, d.h. zuvor gesammelten und gespeicherten Verkehrswerten für einen bestimmten Zeitraum, beispielsweise tagesweise, monatsweise oder sogar für ein ganzes Jahr, in Form eines zeitlichen Verlaufs von einer Steuereinrichtung, beispielsweise der Steuereinrichtung 41 der Bodenstation 40, ermittelt. Gemäß einem beispielhaften Szenario zeichnen die Kommunikationssatelliten des Satellitenkommunikationssystems 20 für einen bestimmten Zeitraum, beispielsweise für ein ganzes Jahr, ihr jeweiliges zeit- und positionsabhängiges Kommunikationsaufkommen auf, um sie in der Steuereinrichtung 41 der Bodenstation 40 dann zeitbezogen anteilsmäßig den betroffenen geografischen Teilgebieten zuordnen zu können. Vorzugsweise ist jeder der Kommunikationssatelliten des Satellitenkommunikationssystems 20 dazu ausgebildet, in regelmäßigen Zeitabständen die Anzahl an Uplink- und Downlink-Kommunikationsverbindungen zu Satellitentelefonen bezogen auf seine aktuelle Position bzw. seiner Antennenausrichtung zu ermitteln. Gemäß einem beispielhaften Szenario überträgt jeder der Kommunikationssatelliten die von ihm ermittelten Werte betreffend seines zeit- und positionsabhängigen Kommunikationsaufkommens beispielsweise zur Bodenstation 40. Die Bodenstation 40 ist dazu ausgebildet, in Abhängigkeit von den beispielsweise in der Speichereinrichtung 42 gespeicherten Ortskoordinaten jedes geografischen Teilgebiets, den von jedem Satelliten zur Bodenstation 40 übertragenen zeitabhängigen Satellitenpositionsdaten und den zeitabhängigen Kommunikationsaufkommen den zu erwartenden zeitabhängigen Kommunikationsbedarf für jedes Teilgebiet zu berechnen.

Alternativ könnte jedes Satellitentelefon den Zeitpunkt und Ort eines Verbindungsaufbaus oder eines Verbindungsaufbauversuchs zu einem Kommunikationssatelliten protokollieren und diese Daten beispielsweise zur Bodenstation 40 übertragen. Die Bodenstation 40 ist dann dazu ausgebildet, in Abhängigkeit von den beispielsweise in der Speichereinrichtung 42 gespeicherten Ortskoordinaten jedes geografischen Teilgebiets und den von jedem Satellitentelefon empfangenen Daten den zu erwartenden zeitabhängigen Kommunikationsbedarf für jedes Teilgebiet zu berechnen.

Gemäß einem bevorzugten Ausführungsbeispiel kann die Steuereinrichtung 41 der Bodenstation 40 ferner für jedes Teilgebiet das dazugehörende, zeitabhängige Dargebot, also die zeitabhängige Gesamtkapazität der Kommunikationssatelliten, die das entsprechende Teilgebiet zu den fraglichen Zeitpunkten zumindest teilweise versorgen, ermitteln. Dies ist möglich, da die zeitabhängigen Positionsdaten der Kommunikationssatelliten, die zeitabhängige Ausrichtung der Antennen der Kommunikationssatelliten bei herkömmlicher Ausrichtung, die Abstrahlcharakteristik der Antennen und die geografischen Koordinaten der Teilgebiete der Bodenstation 40 bekannt sind oder von dieser in an sich bekannter Weise ermittelt werden können.

Vorzugsweise kann jeder der Kommunikationssatelliten 30, 50 dazu ausgebildet sein, seine Positionsdaten und seine Antennenausrichtung und die dazugehörenden Zeitpunkte für eine Zeitspanne, z.B. tageweise, wochenweise, monatsweise oder sogar für ein ganzes Jahr, zu ermitteln und zur Bodenstation 40 zur weiteren Verwendung zu übermitteln. Diese satellitenbasierten Positionsdaten können zusammen mit den dazugehörenden Zeitpunkten in der Speichereinrichtung 42 gespeichert werden.

Darüber hinaus kann in der Speichereinrichtung 42 zum Beispiel ein Optimierungsalgorithmus, beispielsweise ein Minimierungsalgorithmus zur Durchführung von Variantenberechnungen hinterlegt sein. Beispielsweise sei angenommen, dass für einen Zeitraum von einem Jahr der zeit- und ortsabhängige Kommunikationsbedarf, das zeit- und ortsabhängige Dargebot und, in zeitlicher Übereinstimmung hierzu, die zu den jeweiligen Kommunikationssatelliten gehörenden Positionsdaten und herkömmlichen Antennenausrichtungen in der Speichereinrichtung 42 hinterlegt sind. Mit anderen Worten: Für vorgegebene diskrete Zeitpunkte, die sich beispielsweise über ein Jahr erstrecken, sind für jedes geografische Teilgebiet der jeweilige Kommunikationsbedarf, das jeweilige Dargebot und die Positionsdaten der jeweiligen Kommunikationssatelliten bekannt.

Für jeden Kommunikationssatelliten des Satellitenkommunikationssystems 20 können zeitabhängige zweite Steuerinformationen zur Ausrichtung der jeweiligen Antennen in Abhängigkeit von dem zeit- und gebietsabhängigen Kommunikationsbedarf berechnet werden. Hierzu kann die Steuereinrichtung 41 den in der Speichereinrichtung 42 hinterlegten Optimierungsalgorithmus ausführen, wobei insbesondere der zuvor ermittelte zeit- und ortsabhängigen Kommunikationsbedarf, die zeitabhängigen Positionen der Kommunikationssatelliten und Stellgrößen für die Antennen der Kommunikationssatelliten als Eingangsgrößen verwendet werden. Die ermittelten zweiten Steuerinformationen können über die Sende/Empfangseinrichtung 43 und die Antenne 44 zu den jeweiligen Kommunikationssatelliten abgestrahlt und in der Speichereinrichtung des jeweiligen Kommunikationssatelliten, hinsichtlich des Kommunikationssatelliten 30 in der Speichereinrichtung 32, gespeichert werden. Denkbar ist, dass die zweiten Steuerinformationen auch durch irgendeinen anderen Rechner oder irgendein Rechnersystem ermittelt und über eine davon räumlich getrennte Bodenstation zu den jeweiligen Kommunikationssatelliten übertragen werden können.

Da die Höhe der Kommunikationssatelliten des Satellitenkommunikationssystems 20, die Antennencharakteristik ihrer jeweiligen Antennen, die aktuelle Position jedes Kommunikationssatelliten, die geografischen Teilgebiete bekannt sind und ferner darüber hinaus bekannt ist, dass jede Antenne zu jedem Zeitpunkt z.B. auf den Erdmittelpunkt ausgerichtet ist, kann für jeden Zeitpunkt von der Bodenstation 40 berechnet werden, welche geographischen Teilgebiete auf der Erdoberfläche von jeder der Satellitenantennen ausgeleuchtet wird und welche anteilige Kommunikationskapazität jeder Kommunikationssatellit bezogen auf seine Gesamtkapazität zu einem vorgegebenen Zeitpunkt für ein geografisches Teilgebiet maximal zur Verfügung stellen kann. Die Steuereinrichtung 41 ist ferner dazu ausgebildet, für jedes geografische Teilgebiet in Abhängigkeit von der Zeit zu prüfen, ob die von einem oder mehreren Kommunikationssatelliten, die zu diesem Zeitpunkt das geografische Teilgebiet zumindest teilweise kommunikationstechnisch versorgen würden, zur Verfügung stehende Kommunikationskapazität, auch Dargebot genannt, ausreichen würde, den zu diesem Zeitpunkt zu erwartenden Kommunikationsbedarf abzuwickeln. Bei dieser beispielhaften Dargebot-Bedarfsbetrachtung nutzt man Mittelwerte für jedes geografische Teilgebiet unter der Annahme einer homogenen Verteilung der Satelliten-Kommunikationskapazität. Lokale Verletzungen dieser Annahme innerhalb eines Untergebietes eines Teilgebietes können über die Wahl eines zu definierenden Schwellenwertes berücksichtigt werden. Hierzu kann für jedes Teilgebiet ein konstanter Schwellenwert definiert werden, der beispielsweise für alle Teilgebiet gleich sein kann und beispielsweise 0,8 beträgt. Ein Schwellenwert von 0,8 sagt zum Beispiel aus, dass der zu irgendeinem Zeitpunkt für ein bestimmtes Teilgebiet zu erwartende Kommunikationsbedarf 80% der zu diesem Zeitpunkt maximal zur Verfügung stehenden Kommunikationskapazität der Satelliten, die zu diesem Zeitpunkt dieses Teilgebiet zumindest teilweise versorgen, beträgt. Ist der vorzugsweise prognostizierte Kommunikationsbedarf bzw. der Quotient von Kommunikationsbedarf und Dargebot für ein Teilgebiet zu einem bestimmten Zeitpunkt t0 größer oder gleich dem Schwellenwert, reagiert das Satellitenkommunikationssystem 20 derart, dass das Dargebot für dieses Teilgebiet zum Zeitpunkt t0 erhöht wird. Dies wird dadurch erreicht, dass die Antennen geeigneter Kommunikationssatelliten in Abhängigkeit des zeit- und ortsabhängigen Kommunikationsbedarfs auf das Teilgebiet derart ausgerichtet werden, dass die geeigneten Kommunikationssatelliten zum Zeitpunkt t0 einen höheren Anteil ihrer jeweiligen maximalen Kommunikationskapazität für dieses Teilgebiet zur Verfügung stellen können als dies bei einer Ausrichtung der Antenne der Fall wäre, die den zeit- und ortsabhängigen Kommunikationsbedarf nicht berücksichtigt. Geeignete Kommunikationssatelliten sind all diejenigen Satelliten, die zu dem bestimmten Zeitpunkt t0 das betreffende Teilgebiet kommunikationstechnisch versorgen können. Mit anderen Worten: Wird der Schwellenwert für das bestimmte Teilgebiet erreicht oder sogar überschritten, muss, sofern möglich bzw. sinnvoll, zusätzliche Kapazität von wenigstens einem Kommunikationssatelliten aus zumindest einem benachbarten Teilgebiet abgezogen werden, indem dessen Antenne bzw. dessen Versorgungszone gezielt in das bestimmte Teilgebiet gelenkt wird.

Ist zum Beispiel das zeitabhängige Verhältnis zwischen zu erwartendem Kommunikationsbedarf und -dargebot, d.i. die maximal zur Verfügung stehende Kommunikationskapazität bezüglich eines Teilgebiets größer oder gleich diesem Schwellenwert, kann die Steuereinrichtung 41 ermitteln, ob, und wenn ja, wieviel Kommunikationskapazität von einem oder mehreren Kommunikationssatelliten aus benachbarten geografischen Teilgebieten abgezogen und dem bestimmten Teilgebiet mit erhöhtem Kommunikationsbedarf zur Verfügung gestellt werden kann. Angemerkt sei, dass die Steuereinrichtung 41 vorteilhafterweise dazu ausgebildet ist, für jedes Teilgebiet zu ermitteln, ob, und wenn ja, wieviel Kommunikationskapazität von einem oder mehreren Kommunikationssatelliten aus benachbarten geografischen Teilgebieten abgezogen und dem jeweiligen Teilgebiet mit erhöhtem Kommunikationsbedarf zur Verfügung gestellt werden kann. Wie oben bereits erläutert, kann die Steuereinrichtung 41 hierzu unter Ausführung des beispielhaften Minimierungsalgorithmus und in Abhängigkeit beispielsweise der in der Speichereinrichtung 42 hinterlegten zeitabhängigen Positionsdaten der Kommunikationssatelliten, des zeit- und gebietsabhängigen Kommunikationsbedarfs und vorteilhafterweise in Abhängigkeit eines jedem Teilgebiet zugeordneten Schwellenwerts für jeden Kommunikationssatelliten des Satellitenkommunikationssystem 20 zeitabhängige zweite Steuerinformationen berechnen, die u.a. Steuerparameter für eine vorzugsweise prognostizierte zeitabhängige Ausrichtung der Satellitenantennen enthält.

Eine beispielhafte und einfache Minimumbedingung für einen von der Steuereinrichtung 41 ausführbaren Optimierungsalgorithmus zur Bestimmung von Steuerparametern bzw. zweiten Steuerinformationen zur Ausrichtung der Satellitenantennen in Abhängigkeit eines zeit- und ortsabhängigen Kommunikationsbedarfs wird nachfolgend erläutert:

Es gelte:

Sum() =: Summe über alle i=1 bis i=z Teilgebiete T(i)

$$\text{Haupt-Zielfunktion:}\ \ \text{Sum}(P(i)*V(i)) = \text{Minimum}$$

Die Haupt-Zielfunktion ist ein durch die Gewichte P(i) gewichtetes summatives Minimum aller Versorgungsquotienten V(i)=B(i)/D(i) der Teilgebiete T(i), worin B(i) der zeitabhängige Kommunikationsbedarf an gleichzeitig abzuwickelnden Kommunikationsverbindungen für ein Teilgebiet T(i) aufgrund einer Prognose ist, und

D(i) ein zeitabhängiges Dargebot an Gesamtkommunikationskapazität für ein Teilgebiet T(i) ist.

Die Gesamtkommunikationskapazität entspricht der Gesamtanzahl an Kommunikationsverbindungen, welche aufgrund des Beitrages der Footprint-Anteile aller das jeweilige Teilgebiet T(i) ganz oder teilweise ausleuchtenden Satelliten von diesen gleichzeitig bedienbar sind, wobei die relevanten Ausleuchtungsanteile insb. eine Funktion der Antennenausrichtungen A der beteiligten Satelliten ist und die Antennenausrichtung A durch die Position eines Satelliten und der Richtung R seiner Antenne bestimmt ist. (Bei Mehrfachantennen eines Satelliten können die weiteren Antennen mathematisch wie fiktive zusätzliche Satelliten behandelt werden.)

Das Gewicht P(i) ist eine Funktion der Zeit t und des Teilgebietes T(i) und insb. auch eine Funktion von B(i). Somit gilt P(i)=F(t, T(i), B(i)). Mit P(i) kann der Grad einer Unter- oder Überversorgung eines Teilgebiets T(i) gewichtet werden, die vom Versorgungsquotienten V(i)=B(i)/D(i) des Teilgebiete T(i) abhängt. Für ein Teilgebiet T(i), welches vollständig im Meer liegt, ist in der Regel ein sehr geringer Kommunikationsbedarf B(i) zu erwarten, so dass die Gewichtung P(i) für ein solches Teilgebiet T(i) wesentlich geringer als für Teilgebiete, die Städte erfassen, zu wählen ist.

Die Bestimmung aller Antennenausrichtungen R kann wie folgt geschehen:

Wählt man in einer Variationsschleife mit
k=1,2,...,w für den Zeitpunkt t=t1 bestimmte Werte, R(k) aller beteiligten Satellitenantennen, ausgedrückt durch R_all(k,t1)=R_aller_Antennen(k, t=t1), so folgt für jeden Satz R(k) damit ein spezieller Minimum Wert Min(k) als Funktion H() von u.a. R(k) also:

$$\text{Sum}(P(i)*V(i)) = \text{Min}(k) = H(R(k), \dots)$$

Die R(k) Werte, die das kleinste Min(k) ergeben, sind potentiell die besten Steuerparameter für die Antennenausrichtungen aller beteiligten Satelliten. Die R(k) Werte sind in den zweiten Steuerinformationen, welche die Kommunikationssatelliten zur Ausrichtung ihrer Antennen in Abhängigkeit von dem zeit- und ortsabhängigen Kommunikationsbedarf verwenden, enthalten.

Bei jeder der k Variationen zur Erzeugung der Antennenausrichtungssätze R(k) kann zusätzlich gewährleistet werden, dass andere Zusatzbedingungen eingehalten werden. Diese Zusatzbedingungen können sein: Die vormals zu t=t0 geltenden R(k, t0) Werte können bis t=t1 möglichst durch langsame kontinuierliche Antennenbewegungen bis t=t1>t0 in die R(k,t1) Antennenausrichtungssätze überführt werden.

a) Jedes Teilgebiet T(i) wird an jeder Stelle mindestens durch den Footprint einer Antenne abgedeckt.

b) Jeder Footprint einer Antenne ist an allen seinen Rändern durch einen Footprint einer anderen Antenne überlagert, um einen Handover bei Footprint Bewegungen auf der Erdoberfläche zu gewährleisten.

c) Der Vorgang der Antennenneuausrichtungen sollte über einen Zeitraum von t0 bis t1 möglichst kontinuierlich sein und zu möglichst wenig unnötigen Schwenkbewegungen insb. "Hin- und Herbewegungen" führen, was durch die Unterteilung des Zeitraums dt=t1-t0 in kleinere Zeiteinheiten dt'=dt/n für zusätzliche sukzessive Variationsrechnungen geschehen kann.

d) Die für t1 zu ermittelnden R(k, t1) Werte sollten möglichst auch schon gute Zwischenwerte auf dem Weg zu den noch späteren R(k,t2) Werten sein. Möglichst geringe Antennenbewegungen über längere Zeiträume von t0 bis t2 lassen sich also dadurch erzielen, dass die Antennenbewegungen über einen möglichst langen Zeitraum berechnet werden und für diesen Zeitraum möglichst gute Prognosen berechnet werden können.

Abschließend sei gesagt, dass die o.a. Minimumbedingung nur ein Beispiel für eine sinnvolle Minimumbedingung zur Bestimmung der R Werte ist. Wichtig war an einem Beispiel zu zeigen, wie die R Werte in einem Verfahren bestimmt werden können. Anstatt einer Variation der R Werte könnte man zur Lösungsfindung der R Werte auch einen allgemein bekannten Simplex Algorithmus anwenden, der initial zwei geeignete Startdatensätze für R(t1) benötigt.

Ändert sich der zeit- und gebietsabhängige Kommunikationsbedarf, werden von der Steuereinrichtung 41 aktualisierte zweite Steuerinformationen in der zuvor beschriebenen Weise berechnet und zu den jeweiligen Kommunikationssatelliten übertragen und dort wiederum als aktualisierte zweite Steuerdaten gespeichert. Je nach Implementierung können die Kommunikationssatelliten zum Beispiel in Abhängigkeit von der Zeit ankommende Kommunikationsverbindungen protokollieren und diese Datensätze zusammen mit ihren Satellitenpositionen und - Satellitenantennenausrichtungen zur Bodenstation 40 übertragen. Die Steuereinrichtung 41 kann in diesem Fall dazu ausgebildet sein, diese Datensätze mit entsprechenden älteren Datensätzen zu vergleichen und, wenn sie nicht übereinstimmten, basierend auf den neuen Datensätzen aktualisierte zweite Steuerinformationen berechnen. Verschiedene andere Maßnahmen können implementiert werden, um das zeit- und gebietsabhängige Kommunikationsaufkommen und in Abhängigkeit davon die zweiten Steuerinformationen zu aktualisieren.

Mit anderen Worten: Aus den vorzugsweise vorab ermittelten und in der Speichereinrichtung 42 gespeicherten Daten können Prognosen hinsichtlich eines globalen zeit- und ortsabhängigen Kommunikationsbedarfs berechnet werden, um individuelle zweite Steuerdaten für jeden der Kommunikationssatelliten zu berechnen. Unter Ansprechen auf die zweiten Steuerinformationen kann der jeweilige Kommunikationssatellit seine Antennen gezielt auf ein benachbartes Teilgebiet ausrichten, sodass der dort anfallende erhöhte Kommunikationsbedarf zuverlässiger bedient werden kann. Auch kann ein Kommunikationssatellit seine Antenne gezielt auf ein Gebiet neu ausrichten, um eine geringe Versorgung oder geringere Überlappung von Footprints durch eine geänderte Antennenausrichtung anderer Satelliten teilweise oder vollständig zu kompensieren, was insbesondere durch den Minimierungsalgorithmus eine Kettenreaktion dieses Vorgangs auf jeweils benachbarte Satelliten auslösen kann. Sobald die zweiten Steuerinformationen berechnet und den jeweiligen Satelliten bereitgestellt worden sind, kann zum Beispiel die Steuereinrichtung 31 des Kommunikationssatelliten 30 unter Ansprechen auf die in der Speichereinrichtung 32 des Kommunikationssatelliten 30 gespeicherten zweiten Steuerinformationen, die von einem zeit- und gebietsabhängigen Kommunikationsbedarf und von der zeitabhängigen Position des jeweiligen Kommunikationssatelliten abhängen, die Ausrichtung der Antenne 34 gezielt gegenüber der Ausrichtung der Antenne 34 auf den Referenzpunkt, d.h. gegenüber einer Ausrichtung der Antenne 34 ohne Berücksichtigung eines zeit- und ortsabhängigen Kommunikationsbedarfs, verändert werden. In entsprechender Weise können die Antennen der übrigen Kommunikationssatelliten gezielt in ihrer Ausrichtung gegenüber der Ausrichtung der jeweiligen Antenne auf den Referenzpunkt verändert werden. Angemerkt sei an dieser Stelle, dass die jeweiligen zweiten Steuerinformationen hinsichtlich benachbarter Satelliten aufeinander abgestimmt werden können, um so eine optimale Abwicklung bzw. Versorgung eines erhöhten Kommunikationsbedarfs in einem Teilgebiet zu ermöglichen und vorzugsweise Kommunikations-Versorgungslücken in den benachbarten Teilgebieten zu verhindern.

Die Steuereinrichtung 31 des Kommunikationssatelliten und somit die Steuereinrichtungen auch der übrigen Kommunikationssatelliten sind jeweils dazu ausgebildet, die zweiten Steuerinformationen auszuwerten, um zu erkennen, ob Kommunikationskapazität für ein benachbartes Teilgebiet zur Verfügung gestellt werden muss, d.h. ob die Ausrichtung der Antenne 34 gegenüber der Ausrichtung auf den bisherigen Referenzpunkt zu ändern ist, und in Abhängigkeit von dem Auswerteergebnis die jeweilige Antenne unter Ansprechen auf die erste Steuerinformation und/oder unter Ansprechen auf die zweiten Steuerinformationen auszurichten. Auf diese Weise ist eine effiziente, energiesparende und auch kontinuierliche Ansteuerung der Antennen möglich. Denn für die Zeiten, zu denen Kommunikationskapazität beispielsweise des Kommunikationssatelliten 30 aufgrund des eigenen Kommunikationsbedarfs nicht in ein benachbartes Teilgebiet abgezogen werden kann, spricht die Steuereinrichtung 31 auf die ersten Steuerinformationen an, um die Antenne 34 auf den bisherigen Referenzpunkt, vorzugsweise den Erdmittelpunkt auszurichten. Kann jedoch aufgrund der berechneten Prognose hinsichtlich des Kommunikationsaufkommens zu einem Zeitpunkt t Kommunikationskapazität beispielsweise vom Satelliten 30 abgezogen werden, so verwendet die Steuereinrichtung 31 die zweiten Steuerinformationen, um die Antenne 34 gezielt auf ein benachbartes geographisches Teilgebiet mit erhöhtem Kommunikationsbedarf zu richten. Angemerkt sei an dieser Stelle, dass in der Regel die geographischen Teilgebiete so definiert werden, dass zumindest die Antennen von zwei benachbarten Kommunikationssatelliten das jeweilige Teilgebiet ausleuchten.

Angemerkt sei ferner, dass die geographischen Teilgebiete nicht starr festgelegt sein müssen, sondern auch unter bestimmten Voraussetzungen und Umständen neu abgegrenzt werden können. Gemäß einem vorteilhaften Szenario wird versucht, die Teilgebiete so zu wählen, dass sie einen ausreichend homogenen Kommunikationsbedarf abdecken, wobei die Homogenität beispielsweise durch den Quotienten von gleichzeitigen Kommunikationsverbindungen pro Einheitsfläche definiert und/oder berücksichtigt sein kann.

Die Funktionsweise des beispielhaften Satellitenkommunikationssystems 20 wird nachfolgend in Verbindung mit den Figuren 2, 3 und 4 näher erläutert.

Angenommen sei nunmehr, dass, beispielsweise wie zuvor erläutert, eine ganzjährliche Prognose für den Kommunikationsbedarf in allen Teilgebieten ermittelt worden ist, gemäß der für das Teilgebiet 2 zum Zeitpunkt t1 ein Kommunikationsbedarf von 470 gleichzeitig geführten Kommunikationsverbindungen für New York erwartet wird. Weiterhin sei angenommen, dass zum Zeitpunkt t1 in den Nachbargebieten 1 und 3 jeweils ein ausreichend geringes Kommunikationsaufkommen prognostiziert worden ist, sodass Kapazität von Kommunikationssatelliten, die die Nachbargebiete 1 und 3 ausleuchten und vorteilhafterweise benachbart zu dem durch den Footprint 14 symbolisierten Kommunikationssatelliten sich bewegen, zum Zeitpunkt t1 in das Gebiet 2 abgezogen werden können. Angenommen sei ferner, dass entsprechende zweite Steuerinformation gemäß dem zuvor beispielhaft erläuterten Prozedere von der Steuereinrichtung 41 bereits berechnet und zu den jeweiligen Kommunikationssatelliten übertragen und dort abgespeichert worden sind. Weiterhin sei angenommen, dass jeder Kommunikationssatellit genau 1000 gleichzeitig geführte Kommunikationsverbindungen ermöglichen kann.

Figur 2 zeigt ausschnittsweise lediglich drei benachbarte geographische Teilgebiete 1, 2, 3 und beispielhaft deren Ausleuchtung bzw. kommunikationstechnische Versorgung durch Kommunikationssatelliten des Satellitenkommunikationssystems 20 zu einem zukünftigen Zeitpunkt t1. Dies ist in Figur 2 schematisch durch neun Ausleuchtungsbzw. Versorgungszonen 10 bis 18 dargestellt, die von neun Antennen der jeweiligen Kommunikationssatelliten auf der Erdoberfläche erzeugt werden. Die Versorgungszonen weiterer Kommunikationssatelliten sind nicht dargestellt.

Beispielsweise sei angenommen, dass die Versorgungszone 18 vom Kommunikationssatelliten 30 hervorgerufen wird. Die in Figur 2 beispielhaft gezeigte ausschnittsweise Netzabdeckung stellt eine zukünftige Momentaufnahme zum Zeitpunkt t1 dar, bei der angenommen sei, dass die Antennen der an der Versorgung der drei Teilgebiete beteiligten Kommunikationssatelliten allesamt auf den Erdmittelpunkt ausgerichtet sind. Diese zum Zeitpunkt t1 erwartete Versorgungsabdeckung wurde bereits beispielsweise durch die Steuereinrichtung 41 der Bodenstation vorab aus den bekannten zeitabhängigen Positionsdaten der Kommunikationssatelliten des Satellitenkommunikationssystems 20, der jeweiligen Abstrahlcharakteristik der Antennen und deren Ausrichtung auf den Erdmittelpunkt berechnet, wie bereits weiter oben erläutert. Demzufolge ist das Dargebot zum Zeitpunkt t1 für die drei Teilgebiet 1, 2 und 3 bekannt. Weiterhin sei angenommen, dass das geographische Teilgebiet 3 zumindest teilweise den atlantischen Ozean umfasst, das Teilgebiet 2 zumindest New York umfasst, während das Teilgebiet 1 ein größeres geographisches Gebiet um New York herum erfasst. Bei dem dargestellten Beispiel wird also das Teilgebiet 2 vollständig von den Teilgebieten 1 und 3 begrenzt. Weiterhin sei angenommen, dass die Steuereinrichtung 41 der Bodenstation 40 den in New York zum Zeitpunkt t1 zu erwartenden Kommunikationsbedarf in New York ermittelt hat und daher weiß, dass der Quotient von dem zum Zeitpunkt t1 zu erwartenden Kommunikationsbedarf und dem Dargebot für New York zum Zeitpunkt t1 größer oder gleich einem vorgegebenen Schwellenwert ist. Der Schwellenwert betrage zum Beispiel 0,8. Dieser Schwellenwert sagt aus, dass bei einer Ausrichtung der Satellitenantennen auf einen gemeinsamen Referenzpunkt, z.B. den Erdmittelpunkt, der zum Zeitpunkt t1 zu erwartende Kommunikationsbedarf 80% von dem Dargebot, d.i. die maximale Kommunikationskapazität der Kommunikationssatelliten, die zum Zeitpunkt t1 bei Ausrichtung der Antennen auf den Erdmittelpunkt in New York zur Verfügung stehen würden, nicht erreicht oder überschritten werden darf.

Bei der beispielhaften Netzabdeckung gemäß Figur 2 könnte der Kommunikationssatellit, der durch den Footprint 14 symbolisiert ist, 20% seiner Kommunikations- bzw. Kanalkapazität für New York bereitstellen, während der Kommunikationssatellit 30, der durch den Footprint 18 symbolisiert ist, eine Kanalkapazität von 10% bereitstellen würde. Für den beispielhaften Fall, dass jeder der Kommunikationssatelliten eine Kanalkapazität von beispielsweise 1000 hat, was bedeutet, dass jeder Kommunikationssatellit 1000 Kommunikationsverbindungen gleichzeitig abwickeln kann, könnten zum Zeitpunkt t1 300 Kommunikationsverbindungen von den beiden Kommunikationssatelliten mit den Footprints 14 und 18 bedient werden.

Das heißt, bei einem vorgegebenen Schwellenwert von 0,8 müssten bei einem zu erwartenden Kommunikationsaufkommen von über 240 gleichzeitig bestehenden Kommunikationsverbindungen zum Zeit t1 in dem Teilgebiet 2 zusätzliche Kommunikationskapazität z.B. aus den Nachbargebieten 1 und 3 abgezogen werden. Angenommen sei beispielsweise, dass für das Teilgebiet 2 zum Zeitpunkt t1 ein Kommunikationsbedarf von 470 gleichzeitig abzuwickelnden Kommunikationsverbindungen erwartet wird, und dass die Steuereinrichtung 41, wie zuvor bereits erläutert, ermittelt hat, dass zum Zeitpunkt t1 Kommunikationskapazitäten der Kommunikationssatelliten, die die Footprints 13 und 18 erzeugen, aus dem Teilgebiet 1 abgezogen und dem Teilgebiet 2 zusätzlich zur Verfügung gestellt werden können. Die entsprechenden zweiten Steuerinformationen liegen den beiden Kommunikationssatelliten vor.

Angenommen sei nunmehr, dass der durch den Footprint 14 symbolisierte Kommunikationssatellit der Hauptversorgungssatellit ist, dessen Antenne auch für den Zeitpunkt t1 zum Erdmittelpunkt ausgerichtet wird.

Unter Ansprechen auf die zweite Steuerinformation, die zum Zeitpunkt t1 gültig ist, richtet der Kommunikationssatellit, der durch den Footprint 13 symbolisiert ist, seine Antenne vorzugsweise kontinuierlich oder sprunghaft derart aus, dass sie zum Zeitpunkt t1 gegenüber ihrer Ausrichtung auf den Erdmittelpunkt weiter in Satellitenbewegungsrichtung bewegt worden ist, sodass dieser Kommunikationssatellit zum Zeitpunkt t1 eine zusätzliche Kanalkapazität von 10%, das entspricht 100 weiteren Kommunikationsverbindungen, für New York bereitstellen kann. In ähnlicher Weise spricht der durch den Footprint 18 symbolisierte Kommunikationssatellit 30 auf die in der Speichereinrichtung 32 gespeicherte zweite Steuerinformation, die für den Zeitpunkt t1 gültig ist, an, und richtet demzufolge für den Zeitpunkt t1 seine Antenne 34 gegenüber deren Ausrichtung auf den Erdmittelpunkt kontinuierlich oder sprunghaft nach rechts, und zwar entgegen der Satellitenbewegungsrichtung aus, sodass der Kommunikationssatellit 30 zum Zeitpunkt t1 weitere 10% seiner Kanalkapazität für New York bereitstellen kann. Insgesamt kann der Kommunikationssatellit 30 somit zum Zeitpunkt t1 20% einer Kanalkapazität, das entspricht 200 Kommunikationsverbindungen, für das Teilgebiet 2 zur Verfügung stellen. Diese geänderte Netzabdeckung ist in Fig. 3 zu sehen.

Mit anderen Worten: Durch die Neuausrichtung der Antennen der benachbarten Kommunikationssatelliten, die den Footprints 13 und 18 zugeordnet sind, können somit zum Zeitpunkt t1 weitere zusätzliche 300 Kommunikationsverbindungen bereitgestellt. Das heißt, zum Zeitpunkt t1 können von den drei Satelliten eine Kommunikationskapazität von 600 gleichzeitig bedienbaren Kommunikationsverbindungen zu und von Satellitentelefonen bereitgestellt werden, was bei einem Schwellenwert von 0,8 dann 480 reale Kommunikationsverbindungen ermöglichen würde. Die zum Zeitpunkt t1 vorgenommenen Antennenausrichtungen würden also einer Bedarfsprognose für New York von 470 Verbindungen genügen, wenn ein Schwellenwert für New York auf 0,8 gewählt wird. Wir gehen hier davon aus, dass das Verschieben der Footprints 13 und 18 in das Teilgebiet 2 durch zusätzliches Verschieben anderer geeigneter Nachbar-Footprints, die in den Figuren 2 und 3 nicht visualisiert sind, im Teilgebiet 1 keine Versorgungslöcher entstehen lässt, was der von der Steuereinrichtung 41 ausgeführte Optimierungsalgorithmus durch Berechnung geeigneter zweiter Steuerinformationen gewährleistet.

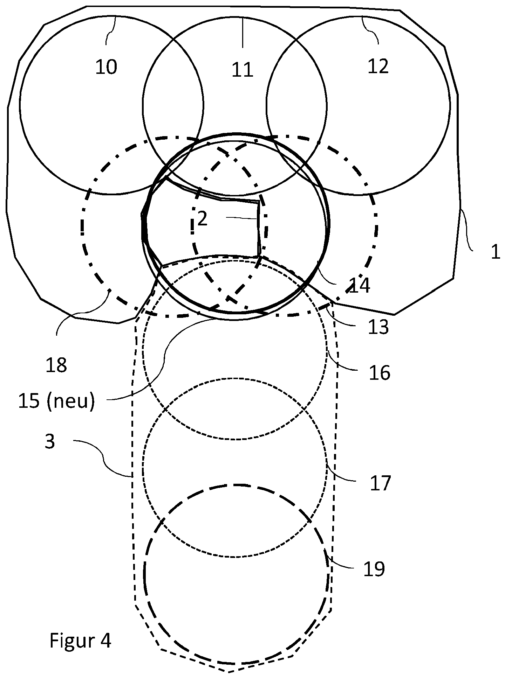

Wäre jedoch der Kommunikationsbedarf im Teilgebiet 2 zum Zeitpunkt t1 höher als 480 Kommunikationsverbindungen prognostiziert worden, so könnte zusätzlich der Footprint 15 senkrecht zur Satellitenbewegungsrichtung hin ins Teilgebiet 2 verschoben werden, was in der Figur 2 durch zwei Pfeile angedeutet und in Figur 3 dargestellt ist. In diesem Falle steuert der Kommunikationssatellit, der durch den Footprint 15 symbolisiert ist, unter Ansprechen auf seine zweite, zum Zeitpunkt t1 gültige Steuerinformation seine Antenne derart an, dass sie kontinuierlich oder sprunghaft nach oben, also senkrecht zur Satellitenbewegungsrichtung und somit weg von der Normalausrichtung auf den Erdmittelpunkt bewegt wird, sodass der durch den Footprint 15 symbolisierte Kommunikationssatellit zum Zeitpunkt t1 zum Beispiel 20% seiner Kanalkapazität, das entspricht 200 zusätzlichen Kommunikationsverbindungen, für New York bereitstellen kann. Zum Zeitpunkt t1 kann somit ein zu erwartender Kommunikationsbedarf von 640 gleichzeitig zu bedienenden Kommunikationsverbindungen abgedeckt werden, bevor aufgrund des beispielhaft vorgegebenen Schwellenwertes von 0,8 eine weitere Maßnahme zur Neuausrichtung von Antennen geeigneter Kommunikationssatelliten erforderlich wird. Neben dem Hauptversorgungssatelliten fungieren die durch die Footprints 13, 15 und 18 symbolisierten Kommunikationssatelliten als Unterstützungs-Kommunikationssatelliten für das Teilgebiet 2. Um durch das Abziehen von Kommunikationskapazität in das Teilgebiet 2 eine Versorgungslücke im Teilgebiet 3 zu verhindern, kann zum Beispiel die Antenne eines benachbarten Kommunikationssatelliten, welcher dem in Fig. 4 gezeigten Footprint 19 zugeordnet ist, zum Zeitpunkt t1 derart ausgerichtet werden, dass das Teilgebiet 3 zumindest teilweise von diesem Kommunikationssatelliten mitversorgt wird.

Als Haupt-Kommunikationssatellit kann derjenige Satellit betrachtet werden, der das zu versorgende Teilgebiet im Wesentlichen zentral ausleuchtet bzw. die höchste Kommunikationskapazität für dieses Teilgebiet bei Ausrichtung seiner Antenne auf einen gemeinsamen Referenzpunkt bereitstellt.

Denkbar ist, dass ein solcher Haupt-Kommunikationssatellit die Ausrichtung seiner Antenne in die Nähe des geographischen Schwerpunktes eines geographischen Gebietes mit hohem Kommunikationsbedarf steuert, so dass er das spezielle Gebiet länger als bei Ausrichtung seiner Antenne auf einen gemeinsamen Referenzpunkt versorgen kann, was dann i.d.R. auch einen Einfluss auf die Steuerung der Unterstützungssatelliten haben kann.

Die gegenüber der Figur 2 geänderte Netzabdeckung bzw. geänderten Footprintpositionen, die an den für den Zeitpunkt t1 prognostizierten Kommunikationsaufwand angepasst worden sind, sind in Figur 3 und 4 schematisch dargestellt.

Es versteht sich, dass durch das gezielte Abziehen von Kanalkapazität aus benachbarten Teilgebieten, hier die Teilgebiete 1 und 3, zugunsten des Teilgebiets 2 mit erhöhtem Kommunikationsaufkommen, dazu führen kann, dass die im vorliegenden Beispiel aus dem Teilgebiet 3 abgezogene Kanalkapazität durch andere Kommunikationssatelliten, die sich benachbart zu den Kommunikationssatelliten, die durch die Footprints 16 und 17 dargestellt sind, kompensiert werden müssen, wie in Figur 4 dargestellt ist.

Der von der Steuereinrichtung 41 ausgeführte Optimierungsalgorithmus berücksichtigt all diese Umstände und erzeugt für jeden Kommunikationssatelliten des Satellitenkommunikationssystem 20 entsprechende zweite Steuerinformationen die dafür sorgen, dass die Satellitenantennen in Abhängigkeit des prognostizierten Kommunikationsaufwands in jedem Teilgebiet und der jeweiligen Satellitenposition auf Teilgebiete ausgerichtet werden können, um gezielt die Überlappungsbereiche benachbarter Footprints derart zu erhöhen, dass ein erhöhter Kommunikationsbedarf in dem jeweiligen geographischen Teilgebiet von den Kommunikationssatelliten bedient werden kann. Mit anderen Worten: der Optimierungsalgorithmus kann beispielsweise aus den vorliegenden Datensätzen ermitteln, wieviel Kanalkapazität jeder Kommunikationssatellit zu einem Zeitpunkt t1 aus einem von ihm gerade ausgeleuchteten Teilgebiet in ein benachbartes Teilgebiet abziehen kann, um dort zu helfen, einen erhöhten Kommunikationsbedarf abzuwickeln, ohne dass Versorgungslücken entstehen.

Die zuvor hinsichtlich des Zeitpunktes t1 beschriebene Funktionsweise des Satellitenkommunikationssystems 20 gilt auch für beliebig andere Zeitpunkte innerhalb einer vorgebaren Zeitspanne, zum Beispiel einer jährlichen Zeitspanne, zu denen zweite Steuerinformationen für die Kommunikationssatelliten zum Beispiel von der Steuereinrichtung 41 berechnet worden sind.

Das zuvor in Verbindung mit den Figuren 2, 3 und 4 beschriebene Verfahren kann auch mit Kommunikationssatelliten durchgeführt werden, die zwei separate Antennen aufweisen, wie dies in Fig. 1 bezüglich des Kommunikationssatelliten angedeutet ist. In diesem Fall würde der Kommunikationssatellit 30 unter Ansprechen auf erste Steuerinformationen seine zweite Antenne 35 zum Zeitpunkt t1 auf den Erdmittelpunkt ausrichten, während die durch die Footprints 13, 15 und 18 symbolisierten Kommunikationssatelliten unter Ansprechen auf ihre zweiten Steuerinformationen ihre jeweiligen ersten Antennen entsprechend einem prognostizierten zeit- und ortsabhängigen Kommunikationsbedarf ausrichten würden.

Zumindest einige der oben beispielhaft geschilderten Aspekte werden nachfolgend zusammengefasst.

Es wird ein Satellitenkommunikationssystem 20 zur mobilen Satellitenkommunikation geschaffen, welches folgende Merkmale aufweisen kann:

mehrere Kommunikationssatelliten 30, 50, die, auf verschiedene Umlaufbahnen verteilt, die Erde umkreisen und jeweils dazu ausgebildet sind, eine vorbestimmte Anzahl an Kommunikationsverbindungen von und zu Satellitentelefonen gleichzeitig abzuwickeln, wobei jeder der Kommunikationssatelliten 30, 50 folgende Merkmale aufweist:

eine ausrichtbare Antenne 34, 51, die dazu ausgebildet ist, eine geografische Zone 15, 17 auf der Erdoberfläche auszuleuchten,
eine Steuereinrichtung 31, die dazu ausgebildet ist, unter Ansprechen auf eine erste Steuerinformation die Antenne 34, 51 unabhängig von der Position des jeweiligen Kommunikationssatelliten 30, auf einen vorgegebenen Referenzpunkt bezüglich der Erde auszurichten und die ferner dazu ausgebildet ist,
unter Ansprechen auf eine zweite, dem jeweiligen Kommunikationssatelliten 30, 50 zugewiesene Steuerinformation, die von einem zeit- und ortsabhängigen Bedarf an gleichzeitig abzuwickelnden Kommunikationsverbindungen und von der zeitabhängigen Position des jeweiligen Kommunikationssatelliten 30, 50 abhängt, die Ausrichtung der Antenne 34, 51 gezielt gegenüber der Ausrichtung der Antenne 34, 51 auf den vorgegebenen Referenzpunkt zu verändern.

Die vorbestimmte Anzahl an Kommunikationsverbindungen, die ein Kommunikationssatellit 30, 50 gleichzeitig abwickeln kann, kann als dessen Kommunikations- bzw. Kanalkapazität bezeichnet werden. Eine Kommunikationsverbindung kann eine Uplink-Verbindung von einem Satellitentelefon zum Kommunikationssatelliten oder eine Downlink-Verbindung vom Kommunikationssatelliten zu einem Satellitentelefon sein.

Ferner sei angemerkt, dass die zweite Antenne 34, 51 unter Ansprechen auf eine erste Steuerinformation nicht in Abhängigkeit eines zeit- und ortsabhängigen Kommunikationsbedarfs ausgerichtet wird.

Zweckmäßigerweise kann die Steuereinrichtung jedes der mehreren Kommunikationssatelliten, wie zum Beispiel die Steuereinrichtung 31 des Kommunikationssatelliten 30, dazu ausgebildet sein, die zweite Steuerinformation auszuwerten, um zu erkennen, ob die Ausrichtung der Antenne 34, 51 gegenüber der Ausrichtung auf den vorgebbaren Referenzpunkt zu ändern ist, und in Abhängigkeit von dem Auswerteergebnis die Antenne 34, 51 unter Ansprechen auf die erste Steuerinformation oder unter Ansprechen auf die zweite Steuerinformation auszurichten.

Um eine optimale kommunikationsbasierte Versorgung zu erzielen, kann die Erdoberfläche in eine Vielzahl von geografischen Teilgebieten 1 bis 3 unterteilt sein, wobei jedem geografischen Teilgebiet 1 bis 3 ein vorab ermittelter, zeitabhängiger Bedarf B(i) an gleichzeitig abzuwickelnden Kommunikationsverbindungen zugeordnet ist. Die Steuereinrichtung jedes der Kommunikationssatelliten, wie zum Beispiel die Steuereinrichtung 31 des Kommunikationssatelliten 30, kann dazu ausgebildet sein, unter Ansprechen auf die zweite Steuerinformation die Antenne 34 gezielt zumindest teilweise auf ein geografisches Teilgebiet 2 auszurichten, dessen zeitabhängiger Bedarf an gleichzeitig abzuwickelnden Kommunikationsverbindungen größer oder gleich einem vorgegebenen Schwellenwert ist. Der Schwellenwert kann für alle Teilgebiete gleich sein.

Gemäß einem ersten Aspekt wird ein Satellitenkommunikationssystem 20 zur mobilen Satellitenkommunikation bereitgestellt, welches folgende Merkmale aufweisen kann: mehrere Kommunikationssatelliten 30, 50, die, auf verschiedene Umlaufbahnen 80 verteilt, die Erde umkreisen, wobei jeder der Kommunikationssatelliten 30, 50, eine vorbestimmte Anzahl an Kommunikationsverbindungen von und zu Satellitentelefonen gleichzeitig abwickeln kann und folgende Merkmale aufweist:

eine erste ausrichtbare Antenne 34 und eine zweite ausrichtbare Antenne 35,
eine Steuereinrichtung 31, die dazu ausgebildet ist,
unter Ansprechen auf eine erste Steuerinformation die Ausrichtung der zweiten Antenne 35 unabhängig von der Position des jeweiligen Kommunikationssatelliten 30 auf einen vorgegebenen Referenzpunkt bezüglich der Erde zu steuern und die ferner dazu ausgebildet ist, unter Ansprechen auf eine zweite, dem jeweiligen Kommunikationssatelliten 30 zugewiesene Steuerinformation, die von einem zeit- und ortsabhängigen Bedarf an gleichzeitig abzuwickelnden Kommunikationsverbindungen und von der zeitabhängigen Position des jeweiligen Kommunikationssatelliten abhängt, die erste Antenne 34 derart gezielt auszurichten, dass sie nicht auf den vorgegebenen Referenzpunkt ausgerichtet ist.

Die vorbestimmte Anzahl an Kommunikationsverbindungen, die ein Kommunikationssatellit 30, 50 gleichzeitig abwickeln kann, kann als dessen Kommunikations- bzw. Kanalkapazität bezeichnet werden. Eine Kommunikationsverbindung kann eine Uplink-Verbindung von einem Satellitentelefon zum Kommunikationssatelliten oder eine Downlink-Verbindung vom Kommunikationssatelliten zu einem Satellitentelefon sein.

Ferner sei angemerkt, dass die zweite Antenne 35 unter Ansprechen auf eine erste Steuerinformation nicht in Abhängigkeit eines zeit- und ortsabhängigen Kommunikationsbedarfs ausgerichtet wird.

Um eine optimale satellitenbasierte Kommunikationsversorgung auf der Erde zu erzielen, kann die Erdoberfläche in eine Vielzahl von geografischen Teilgebieten 1 bis 3 unterteilt ist, wobei jedem geografischen Teilgebiet 1 bis 3 ein zeitabhängiger Bedarf B(i) an gleichzeitig abzuwickelnden Kommunikationsverbindungen zugeordnet ist. Die Steuereinrichtung jedes der Kommunikationssatelliten, wie zum Beispiel Steuereinrichtung 31 des Kommunikationssatelliten 30, kann dazu ausgebildet sein, unter Ansprechen auf die zweite Steuerinformation die erste Antenne 34 gezielt zumindest teilweise auf ein geografisches Teilgebiet auszurichten, dessen zeitabhängiger Bedarf an gleichzeitig abzuwickelnden Kommunikationsverbindungen größer oder gleich einem vorgegebenen Schwellenwert ist.

Zweckmäßigerweise kann die Steuereinrichtung jedes der mehreren Kommunikationssatelliten, wie zum Beispiel die Steuereinrichtung 31 des Kommunikationssatelliten 30, dazu ausgebildet sein, die zweiten Steuerinformationen auszuwerten, um zu erkennen, ob die Antennenausrichtung auf den vorgegebenen Referenzpunkt zu ändern ist, und in Abhängigkeit von dem Auswerteergebnis nur die erste Antenne 34 unter Ansprechen auf die zweite Steuerinformation auf den vorgegebenen Referenzpunkt oder nur die zweite Antenne 35 unter Ansprechen auf die erste Steuerinformation auszurichten oder beide Antennen 34 und 35 unter Ansprechen auf ihre spezifischen Steuerinformation auszurichten.

Der vorgegebene Referenzpunkt kann für jeden der Kommunikationssatelliten derselbe Referenzpunkt, insbesondere der Erdmittelpunkt sein. Alternativ kann jedem der Kommunikationssatelliten ein unterschiedlicher, vorgegebener Referenzpunkt zugeordnet sein, auf den die Antennen unter Ansprechen auf die ersten Steuerinformationen ausrichtbar sind.

Zumindest einige der Umlaufbahnen können erdnahe Umlaufbahnen, sogenannte Low Earth Orbits, sein.

Vorteilhafterweise ist wenigstens eine Bodenstation 40 mit einer Steuereinheit 41 vorgesehen, die dazu ausgebildet ist, unter Berücksichtigung von Informationen über den zeit- und ortsabhängigen Bedarf an gleichzeitig abzuwickelnden Kommunikationsverbindungen und der zeitabhängigen Positionen der Kommunikationssatelliten 30, 50 für jeden der Kommunikationssatelliten die ihm jeweils zugewiesene zweite Steuerinformation zu ermitteln und die Übertragung der zweiten Steuerinformation zu dem jeweiligen Kommunikationssatellit 30, 50 zu veranlassen. Die zweiten Steuerinformationen sind zeitabhängig und können für eine Vielzahl von diskreten Zeitpunkten vorab ermittelt werden. Die Vielzahl von diskreten Zeitpunkten können zu einer vorgebbaren Zeitspanne gehören, die z.B. einen Tag, eine Woche, einen Monat oder ein Jahr umfassen kann.

Um zum Beispiel an ein sich änderndes Kommunikationsverhalten angepasst werden zu können, kann die Steuereinheit 41 der wenigstens einen Bodenstation 40 ferner dazu ausgebildet sein, unter Berücksichtigung eines aktualisierten zeit- und ortsabhängigen Bedarfs an gleichzeitig abzuwickelnden Kommunikationsverbindungen für jeden der Kommunikationssatelliten aktualisierte zweite Steuerinformation zu ermitteln und die Übertragung der aktualisierten zweiten Steuerinformation zu dem jeweiligen Kommunikationssatelliten 30, 50 zu veranlassen. Die zweiten Steuerinformationen sind zeitabhängig und können für eine Vielzahl von diskreten Zeitpunkten vorab aktualisiert werden. Die Vielzahl von diskreten Zeitpunkten können zu einer vorgebbaren Zeitspanne gehören, die z.B. einen Tag, eine Woche, einen Monat oder ein Jahr umfassen kann. In diesem Fall können die zweiten Steuerinformationen zum Beispiel tageweise, wochenweise, monatsweise oder jährlich aktualisiert werden.

Um eine optimale satellitenbasierte Kommunikationsversorgung auf der Erde durch das Satellitenkommunikationssystem 20 zu erreichen, kann

die Steuereinheit 41 der wenigstens einen Bodenstation 40 dazu ausgebildet sein, unter Ausführung eines Optimierungsalgorithmus die zweiten Steuerinformationen für die Kommunikationssatelliten zu ermitteln. Hierzu kann die Steuereinrichtung jedes Kommunikationssatelliten, wie zum Beispiel die Steuereinrichtung 31 des Kommunikationssatelliten 30, dazu ausgebildet sein, unter Ansprechen auf die dem jeweiligen Kommunikationssatelliten 30 zugewiesene zweite Steuerinformation die Antenne 34 des jeweiligen Kommunikationssatelliten 30 derart auszurichten, dass eine optimale Versorgung des zeit- und ortsabhängigen Bedarfs an gleichzeitig abzuwickelnden Kommunikationsverbindungen durch die Kommunikationssatelliten des Satellitenkommunikationssystems erfolgt.

Vorzugsweise weist jeder der Kommunikationssatelliten 30, 50 eine Speichereinrichtung 32 auf, in der die ersten und zweiten Steuerinformationen des jeweiligen Kommunikationssatelliten gespeichert sind.

Gemäß einem zweiten Aspekt wird ein Verfahren zum Ausrichten von Satellitenantennen 34, 51 eines Satellitenkommunikationssystem 20 zur Verfügung gestellt, welches folgende Schritte aufweisen kann:

a) Bereitstellen einer ersten Steuerinformation für jeden Kommunikationssatelliten 30, 50 des Satellitenkommunikationssystems 20, um die Antenne des jeweiligen Kommunikationssatelliten, zum Beispiel die Antenne 34, 35 des Kommunikationssatelliten 30, auf einen vorgegebenen Referenzpunkt bezüglich der Erde ausrichten zu können, wobei die vorgegebenen Referenzpunkte der Kommunikationssatelliten gleich oder verschieden sind;

b) Ermitteln und Bereitstellen, für jeden der Kommunikationssatelliten 30, 50, von zweiten Steuerinformationen, die von einem zeit- und ortsabhängigen Bedarf an gleichzeitig abzuwickelnden Kommunikationsverbindungen und von der zeitabhängigen Position des jeweiligen Kommunikationssatelliten 30, 50 und vorzugsweise auch von deren Antennenöffnungswinkeln, sprich deren Abstrahlcharakteristik, abhängen, um die Ausrichtung der Antenne des jeweiligen Kommunikationssatelliten gezielt gegenüber der Ausrichtung der Antenne auf den vorgegebenen Referenzpunkt zu verändern; und

c) Ausrichten der Antenne 34, 51 wenigstens eines der Kommunikationssatelliten 30, 50 unter Ansprechen auf die diesem Kommunikationssatelliten zugewiesenen zweiten Steuerinformationen derart, dass die Antenne dieses Kommunikationssatelliten, zum Beispiel die Antenne 34 des Kommunikationssatelliten 30, entsprechend dem zeit- und ortsabhängigen Bedarf an gleichzeitig abzuwickelnden Kommunikationsverbindungen ausgerichtet wird.

Um eine optimale satellitenbasierte Kommunikationsversorgung auf der Erde zu erzielen, wird die Erdoberfläche in eine Vielzahl von geografischen Teilgebieten 1 bis 3 unterteilt, wobei für jedes geografische Teilgebiet 1 bis 3 ein zeitabhängiger Bedarf an gleichzeitig abzuwickelnder Kommunikationsverbindungen ermittelt wird, und wobei in Schritt c) die Antenne 34, 51 wenigstens eines der Kommunikationssatelliten 30, 50 unter Ansprechen auf die dem wenigstens einen Kommunikationssatelliten zugewiesene zweite Steuerinformation gezielt zumindest teilweise auf ein geografisches Teilgebiet 2 ausgerichtet wird, dessen zeitabhängiger Bedarf an gleichzeitig abzuwickelnden Kommunikationsverbindungen größer oder gleich einem vorgegebenen Schwellenwert ist.

Vorteilhafterweise umfasst Schritt b) folgende Schritte:
Ermitteln und Bereitstellen, für jeden der Kommunikationssatelliten, von aktualisierten zweiten individuellen Steuerinformationen in Abhängigkeit von einem sich ändernden zeit- und ortsabhängigen Bedarf an gleichzeitig abzuwickelnden Kommunikationsverbindungen.

Vorteilhafterweise umfasst

Schritt b) folgende Schritte:
Ermitteln, für eine Vielzahl von diskreten Zeitpunkten einer vorbestimmten Zeitspanne jeweils den zeit- und ortsabhängigen Bedarf an gleichzeitig abzuwickelnden Kommunikationsverbindungen, die zeitabhängigen Positionen der Kommunikationssatelliten 30, 50 und für jeden der Kommunikationssatelliten 30, 50 die zweiten Steuerinformationen.

Angemerkt sei, dass die zweiten Steuerinformationen dem jeweiligen Kommunikationssatelliten zumindest mitteilen, wann und in welche Richtung seine Antenne gegenüber einer Ausrichtung auf einen vorgegebenen Referenzpunkt zu ändern ist.

**Patentansprüche**

1. Satellitenkommunikationssystem (20) zur mobilen Satellitenkommunikation, umfassend:
mehrere Kommunikationssatelliten (30, 50), die, auf verschiedene Umlaufbahnen (80) verteilt, die Erde umkreisen, wobei jeder der Kommunikationssatelliten (30, 50) eine vorbestimmte Anzahl an Kommunikationsverbindungen von und zu Satellitentelefonen gleichzeitig abwickeln kann und folgende Merkmale aufweist:

   eine erste ausrichtbare Antenne (34) und eine zweite ausrichtbare Antenne (35), eine Steuereinrichtung (31) **dadurch gekennzeichnet dass** die Steuereinrichtung dazu ausgebildet ist,
   unter Ansprechen auf eine erste Steuerinformation die Ausrichtung der zweiten Antenne (35) unabhängig von der Position des jeweiligen Kommunikationssatelliten (30) auf einen vorgegebenen Referenzpunkt bezüglich der Erde zu steuern und die ferner dazu ausgebildet ist, unter Ansprechen auf eine zweite, dem jeweiligen Kommunikationssatelliten (30) zugewiesene Steuerinformation, die von einem zeit- und ortsabhängigen Bedarf an gleichzeitig abzuwickelnden Kommunikationsverbindungen und von der zeitabhängigen Position des jeweiligen Kommunikationssatelliten abhängt, die erste Antenne (34) derart gezielt auszurichten, dass sie nicht auf den vorgegebenen Referenzpunkt ausgerichtet ist.

2. Satellitenkommunikationssystem (20) nach Anspruch 1,
**dadurch gekennzeichnet, dass**

   die Erdoberfläche in eine Vielzahl von geografischen Teilgebieten (1-3) unterteilt ist, dass jedem geografischen Teilgebiet (1-3) ein zeitabhängiger Bedarf an gleichzeitig abzuwickelnden Kommunikationsverbindungen zugeordnet ist, dass die Steuereinrichtung (31) jedes der Kommunikationssatelliten (30) dazu ausgebildet ist, unter Ansprechen auf die zweite Steuerinformation die erste Antenne (34) gezielt zumindest teilweise auf ein geografisches Teilgebiet auszurichten, dessen zeitabhängiger Bedarf an gleichzeitig abzuwickelnden Kommunikationsverbindungen größer oder gleich einem vorgegebenen Schwellenwert ist.

3. Satellitenkommunikationssystem (20) nach Anspruch 1 oder 2,
**dadurch gekennzeichnet, dass**
die Steuereinrichtung (31) jedes der mehreren Kommunikationssatelliten (30) dazu ausgebildet ist, die zweiten Steuerinformationen auszuwerten, um zu erkennen, ob die Antennenausrichtung auf den vorgegebenen Referenzpunkt zu ändern ist, und in Abhängigkeit von dem Auswerteergebnis nur die erste Antenne (34) unter Ansprechen auf die zweite Steuerinformation auf den vorgegebenen Referenzpunkt oder nur die zweite Antenne (35) unter Ansprechen auf die erste Steuerinformation auszurichten.

4. Satellitenkommunikationssystem (20) nach einem der vorstehenden Ansprüche, **dadurch gekennzeichnet, dass**

   der vorgegebene Referenzpunkt für jeden der Kommunikationssatelliten derselbe Referenzpunkt, insbesondere der Erdmittelpunkt ist, oder dass jedem der Kommunikationssatelliten ein unterschiedlicher, vorgegebener Referenzpunkt zugeordnet ist, und/oder dass
   zumindest einige der Umlaufbahnen erdnahe Umlaufbahnen (Low Earth Orbit) sind.

5. Satellitenkommunikationssystem (20) nach einem der vorstehenden Ansprüche, **gekennzeichnet durch**
wenigstens eine Bodenstation (40) mit einer Steuereinheit (41), die dazu ausgebildet ist, unter Berücksichtigung von Informationen über den zeit- und ortsabhängigen Bedarf an gleichzeitig abzuwickelnden Kommunikationsverbindungen und der zeitabhängigen Positionen der Kommunikationssatelliten (30, 50) für jeden der Kommunikationssatelliten die ihm jeweils zugewiesene zweite Steuerinformation zu ermitteln und die Übertragung der zweiten Steuerinformation zu dem jeweiligen Kommunikationssatelliten (30, 50) zu veranlassen.

6. Satellitenkommunikationssystem (20) nach Anspruch 5,
**dadurch gekennzeichnet, dass**
die Steuereinheit (41) der wenigstens einen Bodenstation (40) ferner dazu ausgebildet ist, unter Berücksichtigung eines aktualisierten zeit- und ortsabhängigen Bedarfs an gleichzeitig abzuwickelnden Kommunikationsverbindungen für jeden der Kommunikationssatelliten aktualisierte zweite Steuerinformation zu ermitteln und die Übertragung der aktualisierten zweiten Steuerinformation zu dem jeweiligen Kommunikationssatelliten (30, 50) zu veranlassen.

7. Satellitenkommunikationssystem nach Anspruch 5 oder 6,
**dadurch gekennzeichnet, dass**

die Steuereinheit (41) der wenigstens einen Bodenstation (40) dazu ausgebildet ist, unter Ausführung eines Optimierungsalgorithmus die zweiten Steuerinformationen für die Kommunikationssatelliten zu ermitteln, und dass die Steuereinrichtung (31) jedes Kommunikationssatelliten (30) dazu ausgebildet ist, unter Ansprechen auf die dem jeweiligen Kommunikationssatelliten zugewiesene zweite Steuerinformation die Antenne (34, 51) des jeweiligen Kommunikationssatelliten (30, 50) derart auszurichten, dass eine optimale Versorgung des zeit- und ortsabhängigen Bedarfs an gleichzeitig abzuwickelnden Kommunikationsverbindungen durch die Kommunikationssatelliten des Satellitenkommunikationssystems (20) erfolgt.

8. Satellitenkommunikationssystem (20) nach einem der vorstehenden Ansprüche, **dadurch gekennzeichnet, dass** jeder der Kommunikationssatelliten (30, 50) eine Speichereinrichtung (32) aufweist, in der die ersten und zweiten Steuerinformationen des jeweiligen Kommunikationssatelliten gespeichert sind.

9. Verfahren zum Ausrichten von Satellitenantennen eines Satellitenkommunikationssystems (20) gemäß einem der Ansprüche 1 bis 8, mit folgenden Schritten:

   a) Bereitstellen einer ersten Steuerinformation für jeden Kommunikationssatelliten (30, 50) des Satellitenkommunikationssystems (20), um die Antenne (35, 51) des jeweiligen Kommunikationssatelliten (30, 50) auf einen vorgegebenen Referenzpunkt bezüglich der Erde ausrichten zu können, wobei die vorgegebenen Referenzpunkte der Kommunikationssatelliten gleich oder verschieden sind;

   b) Ermitteln und Bereitstellen, für jeden der Kommunikationssatelliten (30, 50), von zweiten Steuerinformationen, die von einem zeit- und ortsabhängigen Bedarf an gleichzeitig abzuwickelnden Kommunikationsverbindungen und von der zeitabhängigen Position des jeweiligen Kommunikationssatelliten (30, 50) abhängen, um die Ausrichtung der Antenne (34, 51) des jeweiligen Kommunikationssatelliten (30, 50) gezielt gegenüber der Ausrichtung der Antenne (35, 51) auf den vorgegebenen Referenzpunkt zu verändern; und

   c) Ausrichten der Antenne (34, 51) wenigstens eines der Kommunikationssatelliten (30, 50) unter Ansprechen auf die diesem Kommunikationssatelliten zugewiesenen zweiten Steuerinformationen derart, dass die Antenne (34, 51) dieses Kommunikationssatelliten (30, 50) entsprechend dem zeit- und ortsabhängigen Bedarf an gleichzeitig abzuwickelnden Kommunikationsverbindungen ausgerichtet wird,

   **dadurch gekennzeichnet, dass**

   die Erdoberfläche in eine Vielzahl von geografischen Teilgebieten (1-3) unterteilt wird, dass
   für jedes geografische Teilgebiet (1-3) ein zeitabhängiger Bedarf an gleichzeitig abzuwickelnder Kommunikationsverbindungen ermittelt wird, und dass in Schritt c) die Antenne (34, 51) wenigstens eines der Kommunikationssatelliten (30, 50) unter Ansprechen auf die dem wenigstens einen Kommunikationssatelliten zugewiesene zweite Steuerinformation gezielt zumindest teilweise auf ein geografisches Teilgebiet (2) ausgerichtet wird, dessen zeitabhängiger Bedarf an gleichzeitig abzuwickelnden Kommunikationsverbindungen größer oder gleich einem vorgegebenen Schwellenwert ist, dass
   das Verfahren mit Kommunikationssatelliten durchgeführt wird, die zwei separate Antennen (34, 35) aufweisen, und
   das die Kommunikationssatelliten (30) unter Ansprechen auf erste Steuerinformationen ihre zweiten Antennen (35) zum Zeitpunkt t1 auf den Erdmittelpunkt ausrichten, während durch Ausleuchtungszonen (13, 15, 18) symbolisierte, als Unterstützungs-Kommunikationssatelliten für das geografische Teilgebiet (2) fungierende Kommunikationssatelliten (30) unter Ansprechen auf ihre zweiten Steuerinformationen ihre jeweiligen ersten Antennen (34) entsprechend einem prognostizierten zeit- und ortsabhängigen Kommunikationsbedarf ausrichten.

10. Verfahren nach Anspruch 9 ,
    **dadurch gekennzeichnet, dass**
    Schritt b) folgende Schritte umfasst:
    Ermitteln und Bereitstellen, für jeden der Kommunikationssatelliten, von aktualisierten zweiten individuellen Steuerinformationen in Abhängigkeit von einem sich ändernden zeit- und ortsabhängigen Bedarf an gleichzeitig abzuwickelnden Kommunikationsverbindungen.

11. Verfahren nach Anspruch 9 oder 10,
    **dadurch gekennzeichnet, dass**
    Schritt b) folgende Schritte aufweist:
    Ermitteln, für eine Vielzahl von diskreten Zeitpunkten einer vorbestimmten Zeitspanne, jeweils den zeit- und ortsabhängigen Bedarf an gleichzeitig abzuwickelnden Kommunikationsverbindungen, die zeitabhängigen Positionen der Kommunikationssatelliten (30, 50) und für jeden der Kommunikationssatelliten (30, 50) die zweiten Steuerinformationen.

**Claims**

1. A satellite communication system (20) for mobile satellite communication, comprising:
   a plurality of communication satellites (30, 50) orbiting the earth distributed in different orbits (80), each of said communication satellites (30, 50) being capable of simultaneously handling a predetermined number of communication links to and from satellite phones and having the following features:
   a first orientable antenna (34) and a second orientable antenna (35), control means (31), **characterized in that** said control means is adapted to control, in response to first control information, the orientation of said second antenna (35) to a predetermined reference point with respect to the earth independently of the position of the respective communication satellite (30) and is further adapted to align in response to second control information assigned to the respective communications satellite (30), wherein the second control information depends on a time- and location-dependent demand for communications links to be handled simultaneously and on the time-dependent position of the respective communications satellite, the first antenna (34) specifically in such a way that it is not aligned with the predetermined reference point.

2. The satellite communication system (20) according to claim 1,
   **characterized in that**
   the earth's surface is divided into a plurality of geographical sub-areas (1-3), **in that** each geographical sub-area (1-3) is assigned a time-dependent demand for communication links to be handled simultaneously, **in that** the control device (31) of each of the communication satellites (30) is configured, in response to the second control information, to align the first antenna (34) specifically at least partially to a geographical sub-area whose time-dependent demand for communication links to be handled simultaneously is greater than or equal to a predetermined threshold value.

3. The satellite communication system (20) according to claim 1 or 2,
   **characterized in that**
   the control means (31) of each of the plurality of communication satellites (30) is adapted to evaluate the second control information to detect whether to change the antenna orientation to the predetermined reference point and, depending on the evaluation result, to align only the first antenna (34) to the predetermined reference point in response to the second control information or only the second antenna (35) to the predetermined reference point in response to the first control information.

4. The satellite communication system (20) according to one of the preceding claims, **characterized in that**

   the predetermined reference point for each of the communication satellites is the same reference point, in particular the centre of the earth, or that
   a different predetermined reference point is assigned to each of the communication satellites, and/or that
   at least some of the orbits are low earth orbits.

5. The satellite communication system (20) according to one of the preceding claims, **characterized by**
   at least one ground station (40) with a control unit (41) which is designed to determine for each communication satellite the second control information assigned to the respective communication satellite, taking into account information about the time- and location-dependent demand for communication links to be handled simultaneously and the time-dependent positions of the communication satellites (30, 50), and to cause the transmission of the second control information to the respective communication satellite (30, 50).

6. The satellite communication system (20) according to claim 5,
   **characterized in that**
   the control unit (41) of the at least one ground station (40) is further adapted to determine updated second control information for each of the communication satellites, taking into account an updated time- and location-dependent demand for communication links to be handled simultaneously, and to cause the transmission of the updated second control information to the respective communication satellite (30, 50).

7. The satellite communication system according to claim 5 or 6, **characterized in that**

the control unit (41) of the at least one ground station (40) is designed to determine the second control information for the communication satellites by executing an optimization algorithm, and **in that** the control device (31) of each communication satellite (30) is designed to align the antenna (34, 51) of the respective communication satellite (30, 50) in response to the second control information assigned to the respective communication satellite in such a way that the communication satellites of the satellite communication system (20) provide optimum coverage of the time-dependent and location-dependent demand for communication links to be handled simultaneously.

8. The satellite communication system (20) according to any one of the preceding claims, **characterized in that** each of the communication satellites (30, 50) comprises a memory device (32) in which the first and second control information of the respective communication satellite is stored.

9. A method of aligning satellite antennas of a satellite communication system (20) according to any one of claims 1 to 8, comprising the steps of:

a) providing, for each communication satellite (30, 50) of the satellite communication system (20), first control information for aligning the antenna (35, 51) of the respective communication satellite (30, 50) to a predetermined reference point with respect to the earth, the predetermined reference points of the communication satellites being the same or different;
b) determining and providing, for each of the communication satellites (30, 50), second control information dependent on a time and location dependent demand for communication links to be handled simultaneously and on the time dependent position of the respective communication satellite (30, 50) in order to selectively change the orientation of the antenna (34, 51) of the respective communication satellite (30, 50) with respect to the orientation of the antenna (35, 51) to the predetermined reference point; and
c) aligning the antenna (34, 51) of at least one of the communication satellites (30, 50) in response to the second control information assigned to this communication satellite in such a way that the antenna (34, 51) of this communication satellite (30, 50) is aligned in accordance with the time- and location-dependent demand for communication links to be handled simultaneously,

**characterized in that**

the earth's surface is divided into a plurality of geographical sub-areas (1-3),
**in that** for each geographical sub-area (1-3) a time-dependent demand for communication links to be handled simultaneously is determined, and **in that** in step c) the antenna (34, 51) of at least one of the communication satellites (30, 50) is specifically aligned in response to the second control information assigned to the at least one communication satellite at least partially to a geographical sub-area (2), whose time-dependent demand for communication links to be handled simultaneously is greater than or equal to a predetermined threshold value, **in that**
the method is carried out with communication satellites which have two separate antennas (34, 35), and **in that** the communication satellites (30), in response to first control information, align their second antennas (35) with the centre of the earth at time t1, while the second antennas (35), which are symbolized by footprints (13, 15, 18) and acting as support communication satellites for the geographical sub-area (2), align their respective first antennas (34) in response to their second control information in accordance with a predicted time- and location-dependent communication demand.

10. The method according to claim 9, **characterized in that** step b) comprises the steps of:
determining and providing, for each of the communication satellites, updated second individual control information in dependence on a changing time and location dependent demand for communication links to be handled simultaneously.

11. The method according to claim 9 or 10, **characterized in that** step b) comprises the steps of:

determining, for a plurality of discrete points in time of a predetermined period of time, the respective time and location dependent demand for communication links to be handled simultaneously, the time dependent positions of the communication satellites (30, 50) and for each of the communication satellites (30, 50) the second control information.

## Revendications

1. Système de communication par satellite (20) destiné à la communication mobile par satellite, comprenant :
   plusieurs satellites de communication (30, 50), qui, répartis sur différentes orbites (80), sont en orbite autour de la terre, dans lequel chacun des satellites de communication (30, 50) peut réaliser un nombre prédéfini de connexions de communication depuis et vers des téléphones satellites simultanément et présente des caractéristiques suivantes :

   une première antenne (34) orientable et une deuxième antenne (35) orientable,
   un dispositif de commande (31), **caractérisé en ce que** le dispositif de commande est réalisé
   pour commander, en réponse à une première information de commande, l'orientation de la deuxième antenne (35) indépendamment de la position du satellite de communication (30) respectif sur un point de référence spécifié par rapport à la terre et qui est réalisé en outre pour orienter de manière ciblée la première antenne (34), en réponse à une deuxième information de commande attribuée au satellite de communication (30) respectif, qui dépend d'un besoin selon le temps et l'emplacement en connexions de communication à réaliser simultanément et de la position selon le temps du satellite de communication respectif, de telle manière qu'elle n'est pas orientée sur le point de référence spécifié.

2. Système de communication par satellite (20) selon la revendication 1,
   **caractérisé en ce que**

   la surface de la Terre est divisée en une pluralité de régions partielles (1 - 3) géographiques,
   qu'est associé à chaque région partielle (1 - 3) géographique un besoin selon le temps en connexions de communication à réaliser simultanément, que le dispositif de commande (31) de chacun des satellites de communication (30) est réalisé pour orienter la première antenne (34) de manière ciblée au moins en partie sur une région partielle géographique en réponse à la deuxième information de commande, dont le besoin selon le temps en connexions de communication à réaliser simultanément est plus important ou identique à une valeur de seuil spécifiée.

3. Système de communication par satellite (20) selon la revendication 1 ou 2,
   **caractérisé en ce que**
   le dispositif de commande (31) de chacun des plusieurs satellites de communication (30) est réalisé pour évaluer les deuxièmes informations de commande pour identifier si l'orientation d'antenne sur le point de référence spécifié est à modifier et pour orienter, en fonction du résultat de l'évaluation, seulement la première antenne (34) en réponse à la deuxième information de commande sur le point de référence spécifié ou seulement la deuxième antenne (35) en réponse à la première information de commande.

4. Système de communication par satellite (20) selon l'une quelconque des revendications précédentes,
   **caractérisé en ce que**

   le point de référence spécifié pour chacun des satellites de communication est le même point de référence, en particulier le centre de la Terre, ou qu'un point de référence spécifié différent est associé à chacun des satellites de communication, et/ou que
   au moins certaines des orbites sont des orbites proches de la terre (Low Earth Orbit) .

5. Système de communication par satellite (20) selon l'une quelconque des revendications précédentes, **caractérisé par**
   au moins une station au sol (40) avec une unité de commande (41), qui est réalisée pour déterminer, en tenant compte d'informations sur le besoin selon le temps et l'emplacement en connexions de communication à réaliser simultanément et des positions selon le temps des satellites de communication (30, 50) pour chacun des satellites de communication, la deuxième information de commande qui lui est attribuée et pour déclencher la transmission de la deuxième information de commande au satellite de communication (30, 50) respectif.

**6.** Système de communication par satellite (20) selon la revendication 5,
**caractérisé en ce que**
l'unité de commande (41) de l'au moins une station au sol (40) est réalisée en outre pour déterminer, en tenant compte d'un besoin selon le temps et l'emplacement mis à jour en connexions de communication à réaliser simultanément pour chacun des satellites de communication, une deuxième information de commande mise à jour et pour déclencher la transmission de la deuxième information de commande mise à jour au satellite de communication (30, 50) respectif.

**7.** Système de communication par satellite selon la revendication 5 ou 6,
**caractérisé en ce que**
l'unité de commande (41) de l'au moins une station au sol (40) est réalisée pour déterminer les deuxièmes informations de commande pour les satellites de communication en exécutant un algorithme d'optimisation, et que le dispositif de commande (31) de chaque satellite de communication (30) est réalisé pour orienter l'antenne (34, 51) du satellite de communication (30, 50) respectif en réponse à la deuxième information de commande attribuée au satellite de communication respectif de telle manière qu'une alimentation optimale du besoin selon le temps et l'emplacement en connexions de communication à réaliser simultanément est effectuée par les satellites de communication du système de communication par satellite (20).

**8.** Système de communication par satellite (20) selon l'une quelconque des revendications précédentes,
**caractérisé en ce que**
chacun des satellites de communication (30, 50) présente un dispositif de stockage (32), dans lequel les premières et deuxièmes informations de commande du satellite de communication respectif sont stockées.

**9.** Procédé d'orientation d'antennes de satellite d'un système de communication par satellite (20) selon l'une quelconque des revendications 1 à 8, avec des étapes suivantes :

a) de fourniture d'une première information de commande pour chaque satellite de communication (30,50) du système de communication par satellite (20) pour pouvoir orienter l'antenne (35, 51) du satellite de communication (30, 50) respectif sur un point de référence spécifié par rapport à la terre, dans lequel les points de référence spécifiés des satellites de communication sont identiques ou différents ;
b) de détermination et de fourniture, pour chacun des satellites de communication (30, 50), de deuxièmes informations de commande, qui dépendent d'un besoin selon le temps et l'emplacement en connexions de communication à réaliser simultanément et de la position selon le temps du satellite de communication (30, 50) respectif pour modifier l'orientation de l'antenne (34, 51) du satellite de communication (30, 50) respectif e manière ciblée par rapport à l'orientation de l'antenne (35, 51) sur le point de référence spécifié ; et
c) d'orientation de l'antenne (34, 51) d'au moins un des satellites de communication (30, 50) en réponse aux deuxièmes informations de commande attribuées audit satellite de communication de telle manière que l'antenne (34, 51) de ce satellite de communication (30, 50) est orientée de manière à correspondre au besoin selon le temps et l'emplacement en connexions de communication à réaliser simultanément,

**caractérisé en ce que**

la surface de la Terre est divisée en une pluralité de régions partielles (1 - 3) géographiques,
qu'un besoin selon le temps en connexions de communication à réaliser simultanément est déterminé pour chaque région partielle (1 - 3) géographique, et qu'à l'étape c), l'antenne (34, 51) d'au moins un des satellites de communication (30, 50) est orientée de manière ciblée au moins en partie sur une région partielle (2) géographique en réponse à la deuxième information de commande attribuée à l'au moins un satellite de communication,
dont le besoin selon le temps en connexions de communication à réaliser simultanément est plus important qu'une ou identique à une valeur de seuil spécifiée,
que le procédé est mis en œuvre avec des satellites de communication, qui présentent deux antennes (34, 35) séparées, et
que les satellites de communication (30) orientent, en réponse à des premières informations de commande, leurs deuxièmes antennes (35) au moment t1 sur le centre de la Terre, tandis que des satellites de communication (30), symbolisés par des zones d'éclairage (13, 15, 18), faisant office de satellites de communication de soutien pour la région partielle (2) géographique orientent, en réponse à leurs deuxièmes informations de commande, leurs premières antennes (34) respectives de manière à correspondre à un besoin de communication prévu selon le temps et l'emplacement.

**10.** Procédé selon la revendication 9,
**caractérisé en ce que**
l'étape b) comprend des étapes suivantes :
de détermination et de fourniture, pour chacun des satellites de communication, de deuxièmes informations de commande individuelles mises à jour en fonction d'un besoin variant selon le temps et l'emplacement en connexions de communication à réaliser simultanément.

**11.** Procédé selon la revendication 9 ou 10,
**caractérisé en ce que**
l'étape b) présente des étapes suivantes :
de détermination, pour une pluralité de moments discrets d'un laps de temps prédéfini, respectivement du besoin selon le temps et l'emplacement, en connexions de communication à réaliser simultanément, des positions selon le temps des satellites de communication (30, 50) et pour chacun des satellites de communication (30, 50), des deuxièmes informations de commande.

Fig. 1

EP 3 883 145 B1

Figur 2

Figur 3

Satellitenbewegung

10    11    12

2

14

13

18

15

3

16

17

10    11    12

2

14    13 (neu)

18 (neu)

15

3

16

17

1

1

22

EP 3 883 145 B1

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007090506 A
- US 20020077099 A1

- US 7369809 B1